# EUROPEAN PATENT APPLICATION

(11) **EP 3 500 055 A1**
(43) Date of publication of application: **19.06.2019**
(21) Application number: 16915437.4
(22) Date of filing: 07.09.2016
(51) Int. Cl.: H04W 76/20

(54) **METHOD, APPARATUS AND SYSTEM FOR DYNAMICALLY ESTABLISHING LOCAL PACKET DATA NETWORK**

(71) Applicant: Huawei Technologies Co., Ltd., Longgang District Shenzhen, Guangdong 518129 (CN)
(72) Inventor: WANG, Yan, Shenzhen Guangdong 518129 (CN); LI, Yexing, Shenzhen Guangdong 518129 (CN); XU, Changchun, Shenzhen Guangdong 518129 (CN); ZHANG, Jin, Shenzhen Guangdong 518129 (CN)
(74) Representative: Körber, Martin Hans
(86) International application number: PCT/CN2016/098282
(87) International publication number: WO 2018/045501

(57) **Abstract**

Embodiments of the present invention provide a method for dynamically creating a local packet data network, an apparatus, and a system. The method includes: receiving a user plane network element selection request, allocating a first user plane network element to UE based on cell location information, a service type, and an access point name of the UE, and then sending a user plane network element response message that carries an identifier of the first user plane network element to a session management network element, so that the session management network element sends a new session establishment request to the first user plane network element.

## Description

### TECHNICAL FIELD

The present invention relates to the field of communications technologies, and in particular, to a method for dynamically creating a local packet data network, an apparatus, and a system.

### BACKGROUND

In a conventional evolved packet core (Evolved Packet Core, EPC for short) network architecture, user equipment (User Equipment, UE for short hereinafter) is connected to a packet data network (Packet Data Network, PDN for short hereinafter) by using a core network and a border gateway. The PDN is located in an internetwork (internetwork, internet for short). The core network in the network architecture is responsible for sending data to the border gateway. The border gateway sends the data to the PDN in the internet. Because data transmission in the internet is not controlled by the core network, a transmission delay and reliability of the network are not ensured, and a demand for local networking emerges. In a local networking mode, the PDN is connected to the core network, the UE is connected to the PDN and does not need to be connected to the internet, and local loopback is performed in the core network, so that a mobile network pressure can be effectively reduced, and a transmission delay can be reduced. Currently, more applications such as smart office, real-time high definition video or photograph sharing of sports games or concert lives, post-disaster emergency communication, and automatic driving require a local networking capability from a fifth-generation (fifth-generation, 5G for short) network.

In an existing C/U separated distributed gateway logical architecture, functions of a control plane gateway (Controller Gateway, GW-C for short hereinafter) and a user plane network element (User plane Gateway, GW-U for short hereinafter) are separated. The GW-C may define a processing action (such as a data packet forwarding rule) of the GW-U on a data packet. The GW-C sends the data packet forwarding rule to the GW-U. When a data packet sent by UE reaches the GW-U, the GW-U forwards the data packet according to the forwarding rule delivered by the GW-C. In the prior art, to create a local network in the C/U separated distributed gateway logical architecture, a correspondence between an access point name (Access Point Name, APN for short hereinafter) and an identifier of the GW-U is preconfigured in a domain name system (Domain Name System, DNS for short hereinafter). The APN is a character string, used for identifying a local PDN. In addition, a correspondence between a data packet transmit port and a local PDN is configured in the GW-U. When the UE sends an attach request or a PDN connection establishment request, the GW-C may directly find the GW-U in the DNS based on an APN reported by the UE or an APN in subscription data. When the data packet reaches the GW-U, the GW-U forwards the data packet by using the configured data packet transmit port.

As can be learned, the foregoing method is inflexible because a local network is created through preconfiguration, a period for creating the local network is long, and a network location is fixed.

### SUMMARY

Embodiments of the present invention provide a method for dynamically creating a local packet data network, an apparatus, and a system, to create a local PDN anytime and anywhere.

According to a first aspect, an embodiment of the present invention provides a method for dynamically creating a local packet data network, including: receiving, by a user plane selection unit, a user plane network element selection request, where the user plane network element selection request carries cell location information, a service type, and an access point name of user equipment UE; allocating, by the user plane selection unit, a first user plane network element to the UE based on the cell location information, the service type, and the access point name of the UE; and sending, by the user plane selection unit, a user plane network element response message that carries an identifier of the first user plane network element to a session management network element, so that the session management network element sends a new session establishment request to the first user plane network element, where the new session establishment request includes a tunnel endpoint identifier allocated by the session management network element to the UE, a packet data network identity, and data packet processing and forwarding rules, where the tunnel endpoint identifier is allocated by the session management network element to the UE after receiving an attach request/a new packet data network establishment request sent by the UE.

In the method for dynamically creating a local packet data network according to the first aspect, the user plane selection unit interacts with the session management network element in a process in which the UE initiates an attach request/a PDN connection request. In this way, the user plane selection unit obtains the cell location information, the service type, and the APN of the UE, and then allocates a GW-U to the UE, to complete dynamic binding of the GW-U. In addition, when sending the new session establishment request to the GW-U, the session management network element delivers, to the GW-U, processing and forwarding rules of a dynamically created local PDN corresponding to the UE, so that after receiving a data packet, the GW-U correspondingly processes and forwards the data packet according to the delivered processing and forwarding rules, thereby implementing the dynamic creation of the local PDN. In this way, a local PDN can be flexibly created anytime and anywhere, thereby overcoming limitations of the prior art in which a period for creating a local network is long and a network location is fixed.

In a possible design, before the allocating, by the user plane selection unit, a first user plane network element to the user based on the cell location information, the service type, and the access point name of the UE, the method further includes: searching, by the user plane selection unit, a local cache of the user plane selection unit to determine whether there is a second user plane network element corresponding to the cell location information, the service type, and the access point name of the UE, and if yes, using the second user plane network element as the first user plane network element, or if no, allocating the first user plane network element to the UE, and storing a mapping relationship between the first user plane network element and the cell location information, the service type, and the access point name of the UE in the local cache of the user plane selection unit.

In the foregoing possible design, the local cache is added to the user plane selection unit, to store a correspondence between a temporarily allocated GW-U and a dynamically created local PDN, so that a calculation quantity of the user plane selection unit can be effectively reduced, thereby improving processing efficiency.

In a possible design, the user plane network element selection request is sent by the session management network element when identifying, after receiving the attach request/new packet data network establishment request, that the access point name of the UE carried in the attach request/new packet data network establishment request is a dynamically created local packet data network.

In a possible design, the user plane network element selection request is sent by a domain name system after receiving a domain name system request sent by the session management network element, where the domain name system request is sent by the session management network element after receiving the attach request/new packet data network establishment request; and the sending, by the user plane selection unit, a response message that carries an identifier of the first user plane network element to a session management network element includes: sending, by the user plane selection unit, the user plane network element response message that carries the identifier of the first user plane network element to the domain name system, so that the domain name system sends a domain name system request response message to the session management network element after receiving the user plane network element response message, where the domain name system request response message carries the identifier of the first user plane network element.

In a possible design, the user plane network element selection request is sent by the domain name system when identifying, after receiving the domain name system request sent by the session management network element, that the access point name of the UE carried in the domain name system request is a dynamically created local packet data network.

In a possible design, the user plane network element selection request is sent by the domain name system when identifying, after receiving the domain name system request sent by the session management network element, that the access point name of the UE carried in the domain name system request is a dynamically created local packet data network, and when finding no third user plane network element corresponding to the cell location information, the service type, and the access point name of the UE in a local cache of the domain name system; and the sending, by the user plane selection unit, a response message that carries an identifier of the first user plane network element to a session management network element includes: sending, by the user plane selection unit, the user plane network element response message that carries the identifier of the first user plane network element to the domain name system, so that the domain name system stores a mapping relationship between the first user plane network element and the cell location information, the service type, and the access point name of the UE in the local cache of the domain name system after receiving the user plane network element response message, and sends the domain name system request response message to the session management network element, where the domain name system request response message carries the identifier of the first user plane network element.

In a possible design, the session management network element is a control plane gateway or a mobility management network element; or the session management network element is a control plane gateway and a mobility management network element.

According to a second aspect, an embodiment of the present invention provides a method for dynamically creating a local packet data network, including: sending, by a session management network element, a user plane network element selection request to a user plane selection unit, where the user plane network element selection request carries cell location information, a service type, and an access point name of UE, so that the user plane selection unit allocates a first user plane network element to the UE based on the cell location information, the service type, and the access point name of the UE; receiving, by the session management network element, a user plane network element response message that carries an identifier of the first user plane network element and that is sent by the user plane selection unit; and sending, by the session management network element, a new session establishment request to the first user plane network element, where the new session establishment request includes a tunnel endpoint identifier allocated by the session management network element to the UE, a packet data network identity, and data packet processing and forwarding rules, where the tunnel endpoint identifier is allocated by the session management network element to the UE after receiving an attach request/a new packet data network establishment request sent by the UE.

In the method for dynamically creating a local packet data network according to the second aspect, the user plane selection unit interacts with the session management network element in a process in which the UE initiates an attach request/a PDN connection request. In this way, the user plane selection unit obtains the cell location information, the service type, and the APN of the UE, and then allocates a GW-U to the UE, to complete dynamic binding of the GW-U. In addition, when sending the new session establishment request to the GW-U, the session management network element delivers, to the GW-U, processing and forwarding rules of a dynamically created local PDN corresponding to the UE, so that after receiving a data packet, the GW-U correspondingly processes and forwards the data packet according to the delivered processing and forwarding rules, thereby implementing the dynamic creation of the local PDN. In this way, a local PDN can be flexibly created anytime and anywhere, thereby overcoming limitations of the prior art in which a period for creating a local network is long and a network location is fixed.

In a possible design, the first user plane network element is found by the user plane selection unit in a local cache of the user plane selection unit based on a mapping relationship between a user plane network element and the cell location information, the service type, and the access point name of the UE before allocating the first user plane network element to the UE.

In the foregoing possible design, the local cache is added to the user plane selection unit, to store a correspondence between a temporarily allocated GW-U and a dynamically created local PDN, so that a calculation quantity of the user plane selection unit can be effectively reduced, thereby improving processing efficiency.

In a possible design, before the sending, by a session management network element, a user plane network element selection request to a user plane selection unit, the method further includes: identifying, by the session management network element, that the access point name of the UE carried in the attach request/new packet data network establishment request is a dynamically created local packet data network.

In a possible design, the sending, by a session management network element, a user plane network element selection request to a user plane selection unit includes: sending, by the session management network element, a domain name system request to a domain name system, so that the domain name system sends the user plane network element selection request to the user plane selection unit; and correspondingly, the receiving, by the session management network element, a user plane network element response message that carries an identifier of the first user plane network element and that is sent by the user plane selection unit includes: receiving, by the session management network element, a domain name system request response message sent by the domain name system after receiving the user plane network element response message, where the domain name system request response message carries the identifier of the first user plane network element.

In a possible design, the sending, by a session management network element, a user plane network element selection request to a user plane selection unit includes: sending, by the session management network element, the domain name system request to the domain name system, so that the domain name system sends the user plane network element selection request to the user plane selection unit when identifying that the access point name of the UE carried in the domain name system request is a dynamically created local packet data network; and correspondingly, the receiving, by the session management network element, a user plane network element response message that carries an identifier of the first user plane network element and that is sent by the user plane selection unit includes: receiving, by the session management network element, the domain name system request response message sent by the domain name system after receiving the user plane network element response message, where the domain name system request response message carries the identifier of the first user plane network element.

In a possible design, the sending, by a session management network element, a user plane network element selection request to a user plane selection unit includes: sending, by the session management network element, a domain name system request to a domain name system, so that when identifying that the access point name of the UE carried in the domain name system request is a dynamically created local packet data network, the domain name system searches a local cache of the domain name system to determine whether there is a user plane network element corresponding to the cell location information, the service type, and the access point name of the UE, and if no, sends the user plane network element selection request to the user plane selection unit, or if yes, directly sends a domain name system request response message to the session management network element, where the DNS request response message carries an identifier of the found user plane network element, and the found user plane network element is used as the first user plane network element; and correspondingly, the receiving, by the session management network element, a user plane network element response message that carries an identifier of the first user plane network element and that is sent by the user plane selection unit includes: receiving, by the session management network element, the domain name system request response message sent by the domain name system after storing a mapping relationship between the first user plane network element and the cell location information, the service type, and the access point name of the UE in the local cache of the domain name system after receiving the user plane network element response message, where the domain name system request response message carries the identifier of the first user plane network element.

In a possible design, the session management network element is a control plane gateway or a mobility management network element; or the session management network element is a control plane gateway and a mobility management network element.

According to a third aspect, an embodiment of the present invention provides a method for dynamically creating a local packet data network, including: receiving, by a user plane network element, a new session establishment request sent by a session management network element, where the new session establishment request includes a tunnel endpoint identifier allocated by the session management network element to UE, a packet data network identity, and data packet processing and forwarding rules, where the tunnel endpoint identifier is allocated by the session management network element to the UE after receiving an attach request/a new packet data network establishment request sent by the UE; and finding, by the user plane network element when receiving a data packet, a packet data network identity and data packet processing and forwarding rules based on a tunnel endpoint identifier of the data packet, and correspondingly processing and forwarding the data packet according to the data packet processing and forwarding rules, thereby implementing dynamic creation of the local PDN. In this way, a local PDN can be flexibly created anytime and anywhere, thereby overcoming limitations of the prior art in which a period for creating a local network is long and a network location is fixed.

According to a fourth aspect, an embodiment of the present invention provides a user plane selection unit, including:
a receiving module, configured to receive a user plane network element selection request, where the user plane network element selection request carries cell location information, a service type, and an access point name of user equipment UE; an allocation module, configured to allocate a first user plane network element to the UE based on the cell location information, the service type, and the access point name of the UE; and a sending module, configured to send a user plane network element response message that carries an identifier of the first user plane network element to a session management network element, so that the session management network element sends a new session establishment request to the first user plane network element, where the new session establishment request includes a tunnel endpoint identifier allocated by the session management network element to the UE, a packet data network identity, and data packet processing and forwarding rules, where the tunnel endpoint identifier is allocated by the session management network element to the UE after receiving an attach request/a new packet data network establishment request sent by the UE.

In a possible design, the allocation module is specifically configured to: search a local cache of the user plane selection unit to determine whether there is a second user plane network element corresponding to the cell location information, the service type, and the access point name of the UE, and if yes, use the second user plane network element as the first user plane network element, or if no, allocate the first user plane network element to the UE, and store a mapping relationship between the first user plane network element and the cell location information, the service type, and the access point name of the UE in the local cache of the user plane selection unit.

In a possible design, the user plane network element selection request is sent by the session management network element when identifying, after receiving the attach request/new packet data network establishment request, that the access point name of the UE carried in the attach request/new packet data network establishment request is a dynamically created local packet data network.

In a possible design, the user plane network element selection request is sent by a domain name system after receiving a domain name system request sent by the session management network element, where the domain name system request is sent by the session management network element after receiving the attach request/new packet data network establishment request; and
the sending module is specifically configured to: send the user plane network element response message that carries the identifier of the first user plane network element to the domain name system, so that the domain name system sends a domain name system request response message to the session management network element after receiving the user plane network element response message, where the domain name system request response message carries the identifier of the first user plane network element.

In a possible design, the user plane network element selection request is sent by the domain name system when identifying, after receiving the domain name system request sent by the session management network element, that the access point name of the UE carried in the domain name system request is a dynamically created local packet data network.

In a possible design, the user plane network element selection request is sent by the domain name system when identifying, after receiving the domain name system request sent by the session management network element, that the access point name of the UE carried in the domain name system request is a dynamically created local packet data network, and when finding no third user plane network element corresponding to the cell location information, the service type, and the access point name of the UE in a local cache of the domain name system; and the sending module is specifically configured to: send the user plane network element response message that carries the identifier of the first user plane network element to the domain name system, so that the domain name system stores a mapping relationship between the first user plane network element and the cell location information, the service type, and the access point name of the UE in the local cache of the domain name system after receiving the user plane network element response message, and sends the domain name system request response message to the session management network element, where the domain name system request response message carries the identifier of the first user plane network element.

In a possible design, the session management network element is a control plane gateway or a mobility management network element; or
the session management network element is a control plane gateway and a mobility management network element.

For beneficial effects of the user plane selection unit according to any one of the fourth aspect and the possible implementations of the fourth aspect, refer to beneficial effects of any one of the first aspect and the possible implementations of the first aspect. Details are not described herein again.

According to a fifth aspect, an embodiment of the present invention provides a session management network element, including: a sending module, configured to send a user plane network element selection request to a user plane selection unit, where the user plane network element selection request carries cell location information, a service type, and an access point name of UE, so that the user plane selection unit allocates a first user plane network element to the UE based on the cell location information, the service type, and the access point name of the UE; and a receiving module, configured to receive a user plane network element response message that carries an identifier of the first user plane network element and that is sent by the user plane selection unit, where the sending module is further configured to send a new session establishment request to the first user plane network element, where the new session establishment request includes a tunnel endpoint identifier allocated by the session management network element to the UE, a packet data network identity, and data packet processing and forwarding rules, where the tunnel endpoint identifier is allocated by the session management network element to the UE after receiving an attach request/a new packet data network establishment request sent by the UE.

In a possible design, the first user plane network element is found by the user plane selection unit in a local cache of the user plane selection unit based on a mapping relationship between a user plane network element and the cell location information, the service type, and the access point name of the UE before allocating the first user plane network element to the UE.

In a possible design, the session management network element further includes:
an identification module, configured to: before the sending module sends the user plane network element selection request to the user plane selection unit, identify that the access point name of the UE carried in the attach request/new packet data network establishment request is a dynamically created local packet data network.

In a possible design, the sending module is specifically configured to: send a domain name system request to a domain name system, so that the domain name system sends the user plane network element selection request to the user plane selection unit; and correspondingly, the receiving module is specifically configured to: receive a domain name system request response message sent by the domain name system after receiving the user plane network element response message, where the domain name system request response message carries the identifier of the first user plane network element.

In a possible design, the sending module is specifically configured to: send the domain name system request to the domain name system, so that the domain name system sends the user plane network element selection request to the user plane selection unit when identifying that the access point name of the UE carried in the domain name system request is a dynamically created local packet data network; and correspondingly, the receiving module is specifically configured to: receive the domain name system request response message sent by the domain name system after receiving the user plane network element response message, where the domain name system request response message carries the identifier of the first user plane network element.

In a possible design, the sending module is specifically configured to: send a domain name system request to a domain name system, so that when identifying that the access point name of the UE carried in the domain name system request is a dynamically created local packet data network, the domain name system searches a local cache of the domain name system to determine whether there is a user plane network element corresponding to the cell location information, the service type, and the access point name of the UE, and if no, sends the user plane network element selection request to the user plane selection unit, or if yes, directly sends a domain name system request response message to the session management network element, where the DNS request response message carries an identifier of the found user plane network element, and the found user plane network element is used as the first user plane network element; and correspondingly, the receiving module is specifically configured to: receive the domain name system request response message sent by the domain name system after storing a mapping relationship between the first user plane network element and the cell location information, the service type, and the access point name of the UE in the local cache of the domain name system after receiving the user plane network element response message, where the domain name system request response message carries the identifier of the first user plane network element.

In a possible design, the session management network element is a control plane gateway or a mobility management network element; or the session management network element is a control plane gateway and a mobility management network element.

For beneficial effects of the session management network element according to any one of the fifth aspect and the possible implementations of the fifth aspect, refer to beneficial effects of any one of the second aspect and the possible implementations of the second aspect. Details are not described herein again.

According to a sixth aspect, an embodiment of the present invention provides a user plane network element, including:
a receiving module, configured to receive a new session establishment request sent by a session management network element, where the new session establishment request includes a tunnel endpoint identifier allocated by the session management network element to UE, a packet data network identity, and data packet processing and forwarding rules, where the tunnel endpoint identifier is allocated by the session management network element to the UE after receiving an attach request/a new packet data network establishment request sent by the UE; and a processing module, configured to: find, when the receiving module receives a data packet, a packet data network identity and data packet processing and forwarding rules based on a tunnel endpoint identifier of the data packet, and correspondingly process and forward the data packet according to the data packet processing and forwarding rules, thereby implementing dynamic creation of the local PDN. In this way, a local PDN can be flexibly created anytime and anywhere, thereby overcoming limitations of the prior art in which a period for creating a local network is long and a network location is fixed.

According to a seventh aspect, an embodiment of the present invention provides a system for dynamically creating a local packet data network, including the user plane selection unit according to any one of the fourth aspect and the possible implementations of the fourth aspect, the session management network element according to any one of the fifth aspect and the possible implementations of the fifth aspect, and the user plane network element according to the sixth aspect.

According to an eighth aspect, an embodiment of the present invention provides a user plane selection unit, including:
a receiver, configured to receive a user plane network element selection request, where the user plane network element selection request carries cell location information, a service type, and an access point name of user equipment UE; a processor, configured to allocate a first user plane network element to the UE based on the cell location information, the service type, and the access point name of the UE; and a transmitter, configured to send a user plane network element response message that carries an identifier of the first user plane network element to a session management network element, so that the session management network element sends a new session establishment request to the first user plane network element, where the new session establishment request includes a tunnel endpoint identifier allocated by the session management network element to the UE, a packet data network identity, and data packet processing and forwarding rules, where the tunnel endpoint identifier is allocated by the session management network element to the UE after receiving an attach request/a new packet data network establishment request sent by the UE.

In a possible design, the processor is specifically configured to: search a local cache of the user plane selection unit to determine whether there is a second user plane network element corresponding to the cell location information, the service type, and the access point name of the UE, and if yes, use the second user plane network element as the first user plane network element, or if no, allocate the first user plane network element to the UE, and store a mapping relationship between the first user plane network element and the cell location information, the service type, and the access point name of the UE in the local cache of the user plane selection unit.

In a possible design, the user plane network element selection request is sent by the session management network element when identifying, after receiving the attach request/new packet data network establishment request, that the access point name of the UE carried in the attach request/new packet data network establishment request is a dynamically created local packet data network.

In a possible design, the user plane network element selection request is sent by a domain name system after receiving a domain name system request sent by the session management network element, where the domain name system request is sent by the session management network element after receiving the attach request/new packet data network establishment request; and the transmitter is specifically configured to: send the user plane network element response message that carries the identifier of the first user plane network element to the domain name system, so that the domain name system sends a domain name system request response message to the session management network element after receiving the user plane network element response message, where the domain name system request response message carries the identifier of the first user plane network element.

In a possible design, the user plane network element selection request is sent by the domain name system when identifying, after receiving the domain name system request sent by the session management network element, that the access point name of the UE carried in the domain name system request is a dynamically created local packet data network.

In a possible design, the user plane network element selection request is sent by the domain name system when identifying, after receiving the domain name system request sent by the session management network element, that the access point name of the UE carried in the domain name system request is a dynamically created local packet data network, and when finding no third user plane network element corresponding to the cell location information, the service type, and the access point name of the UE in a local cache of the domain name system; and the transmitter is specifically configured to: send the user plane network element response message that carries the identifier of the first user plane network element to the domain name system, so that the domain name system stores a mapping relationship between the first user plane network element and the cell location information, the service type, and the access point name of the UE in the local cache of the domain name system after receiving the user plane network element response message, and sends the domain name system request response message to the session management network element, where the domain name system request response message carries the identifier of the first user plane network element.

In a possible design, the session management network element is a control plane gateway or a mobility management network element; or the session management network element is a control plane gateway and a mobility management network element.

For beneficial effects of the user plane selection unit according to any one of the eighth aspect and the possible implementations of the eighth aspect, refer to beneficial effects of any one of the first aspect and the possible implementations of the first aspect. Details are not described herein again.

According to a ninth aspect, an embodiment of the present invention provides a session management network element, including: a transmitter, configured to send a user plane network element selection request to a user plane selection unit, where the user plane network element selection request carries cell location information, a service type, and an access point name of UE, so that the user plane selection unit allocates a first user plane network element to the UE based on the cell location information, the service type, and the access point name of the UE; and a receiver, configured to receive a user plane network element response message that carries an identifier of the first user plane network element and that is sent by the user plane selection unit, where the transmitter is further configured to send a new session establishment request to the first user plane network element, where the new session establishment request includes a tunnel endpoint identifier allocated by the session management network element to the UE, a packet data network identity, and data packet processing and forwarding rules, where the tunnel endpoint identifier is allocated by the session management network element to the UE after receiving an attach request/a new packet data network establishment request sent by the UE.

In a possible design, the first user plane network element is found by the user plane selection unit in a local cache of the user plane selection unit based on a mapping relationship between a user plane network element and the cell location information, the service type, and the access point name of the UE before allocating the first user plane network element to the UE.

In a possible design, a processor is further included, configured to: before the transmitter sends the user plane network element selection request to the user plane selection unit, identify that the access point name of the UE carried in the attach request/new packet data network establishment request is a dynamically created local packet data network.

In a possible design, the transmitter is specifically configured to: send a domain name system request to a domain name system, so that the domain name system sends the user plane network element selection request to the user plane selection unit; and correspondingly, the receiver is specifically configured to: receive a domain name system request response message sent by the domain name system after receiving the user plane network element response message, where the domain name system request response message carries the identifier of the first user plane network element.

In a possible design, the transmitter is specifically configured to: send the domain name system request to the domain name system, so that the domain name system sends the user plane network element selection request to the user plane selection unit when identifying that the access point name of the UE carried in the domain name system request is a dynamically created local packet data network; and correspondingly, the receiver is specifically configured to: receive the domain name system request response message sent by the domain name system after receiving the user plane network element response message, where the domain name system request response message carries the identifier of the first user plane network element.

In a possible design, the transmitter is specifically configured to: send a domain name system request to a domain name system, so that when identifying that the access point name of the UE carried in the domain name system request is a dynamically created local packet data network, the domain name system searches a local cache of the domain name system to determine whether there is a user plane network element corresponding to the cell location information, the service type, and the access point name of the UE, and if no, sends the user plane network element selection request to the user plane selection unit, or if yes, directly sends a domain name system request response message to the session management network element, where the DNS request response message carries an identifier of the found user plane network element, and the found user plane network element is used as the first user plane network element; and
correspondingly, the receiver is specifically configured to: receive the domain name system request response message sent by the domain name system after storing a mapping relationship between the first user plane network element and the cell location information, the service type, and the access point name of the UE in the local cache of the domain name system after receiving the user plane network element response message, where the domain name system request response message carries the identifier of the first user plane network element.

In a possible design, the session management network element is a control plane gateway or a mobility management network element; or the session management network element is a control plane gateway and a mobility management network element.

For beneficial effects of the session management network element according to any one of the ninth aspect and the possible implementations of the ninth aspect, refer to beneficial effects of any one of the second aspect and the possible implementations of the second aspect. Details are not described herein again.

According to a tenth aspect, an embodiment of the present invention provides a user plane network element, including:
a receiver, configured to receive a new session establishment request sent by a session management network element, where the new session establishment request includes a tunnel endpoint identifier allocated by the session management network element to UE, a packet data network identity, and data packet processing and forwarding rules, where the tunnel endpoint identifier is allocated by the session management network element to the UE after receiving an attach request/a new packet data network establishment request sent by the UE; and a processor, configured to: find, when the receiver receives a data packet, a packet data network identity and data packet processing and forwarding rules based on a tunnel endpoint identifier of the data packet, and correspondingly process and forward the data packet according to the data packet processing and forwarding rules, thereby implementing dynamic creation of a local PDN. In this way, a local PDN can be flexibly created anytime and anywhere, thereby overcoming limitations of the prior art in which a period for creating a local network is long and a network location is fixed.

According to an eleventh aspect, an embodiment of the present invention provides a system for dynamically creating a local packet data network, including the user plane selection unit according to any one of the eighth aspect and the possible implementations of the eighth aspect, the session management network element according to any one of the ninth aspect and the possible implementations of the ninth aspect, and the user plane network element according to the tenth aspect.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and a person of ordinary skill in the art may derive other drawings from these accompanying drawings without creative efforts.
FIG. 1 is a schematic flowchart of Embodiment 1 of a method for dynamically creating a local PDN according to the present invention;
FIG. 2 is a schematic flowchart of Embodiment 2 of a method for dynamically creating a local PDN according to the present invention;
FIG. 3 is a schematic flowchart of Embodiment 3 of a method for dynamically creating a local PDN according to the present invention;
FIG. 4 is a schematic diagram of an interaction process of Embodiment 4 of a method for dynamically creating a local PDN according to the present invention;
FIG. 5 is a schematic diagram of an interaction process of Embodiment 5 of a method for dynamically creating a local PDN according to the present invention;
FIG. 6 is a schematic diagram of an interaction process of Embodiment 6 of a method for dynamically creating a local PDN according to the present invention;
FIG. 7 is a schematic diagram of an interaction process of Embodiment 7 of a method for dynamically creating a local PDN according to the present invention;
FIG. 8 is a schematic diagram of an interaction process of Embodiment 8 of a method for dynamically creating a local PDN according to the present invention;
FIG. 9 is a schematic diagram of an interaction process of Embodiment 9 of a method for dynamically creating a local PDN according to the present invention;
FIG. 10 is a schematic structural diagram of Embodiment 1 of a user plane selection unit according to the present invention;
FIG. 11 is a schematic structural diagram of Embodiment 1 of a session management network element according to the present invention;
FIG. 12 is a schematic structural diagram of Embodiment 2 of a session management network element according to the present invention;
FIG. 13 is a schematic structural diagram of Embodiment 1 of a user plane network element according to the present invention;
FIG. 14 is a schematic structural diagram of Embodiment 2 of a user plane selection unit according to the present invention;
FIG. 15 is a schematic structural diagram of Embodiment 3 of a session management network element according to the present invention;
FIG. 16 is a schematic structural diagram of Embodiment 4 of a session management network element according to the present invention; and
FIG. 17 is a schematic structural diagram of Embodiment 2 of a user plane network element according to the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

The technical solutions in the embodiments of the present invention may be applied to various communications systems in a wireless cellular network, such as: a Global System for Mobile Communications (Global System for Mobile Communications, GSM for short), a Code Division Multiple Access (Code Division Multiple Access, CDMA for short) system, a Wideband Code Division Multiple Access (Wideband Code Division Multiple Access Wireless, WCDMA for short) system, a general packet radio service (General Packet Radio Service, GPRS for short) system, an LTE system, and a Universal Mobile Telecommunication System (Universal Mobile Telecommunication System, UMTS for short), and this is not limited in the embodiments of the present invention.

The technical solutions of the embodiments of the present invention are mainly applied to a C/U separated distributed gateway logical architecture, in which a GW-C is responsible for a control plane, a GW-U is responsible for a user plane, and functions of the GW-C and the GW-U are separated. Network elements used in the embodiments of the present invention mainly include a session management network element, a GW-U, a user plane selection unit (IN-PDN Controller), and a DNS. The user plane selection unit is a new network element introduced to the embodiments of the present invention, may exist as an independent network element, or may exist in another network element such as a DNS, and is configured to complete selection of a GW-U in a process of dynamically creating a local PDN. The session management network element may be a mobility management network element (Mobility Management Entity, MME for short hereinafter), or a GW-C, or may be an MME and a GW-C.

Because locations and time points at which various applications appear cannot be predetermined, a demand for quickly completing local networking anytime and anywhere emerges. To resolve this problem, in a method for dynamically creating a local PDN provided in the embodiments of the present invention, a user plane selection unit interacts with a session management network element or a DNS in a process in which UE initiates an attach request/a PDN connection request, a GW-U is allocated to the UE based on cell location information, a service type, and an APN of the UE, and the session management network element sends a correspondence between a user data packet and a dynamic PDN and a forwarding rule to the GW-U, to implement dynamic creation of a local PDN. In the embodiments of the present invention, there are two specific PDN connection scenarios. In one scenario, a device is powered on and a local PDN connection is established in a UE attachment process. In the other scenario, when UE enables an application program (APP), a new local PDN establishment request is initiated. The following describes in detail the technical solutions provided in the embodiments of the present invention with reference to the accompanying drawings.

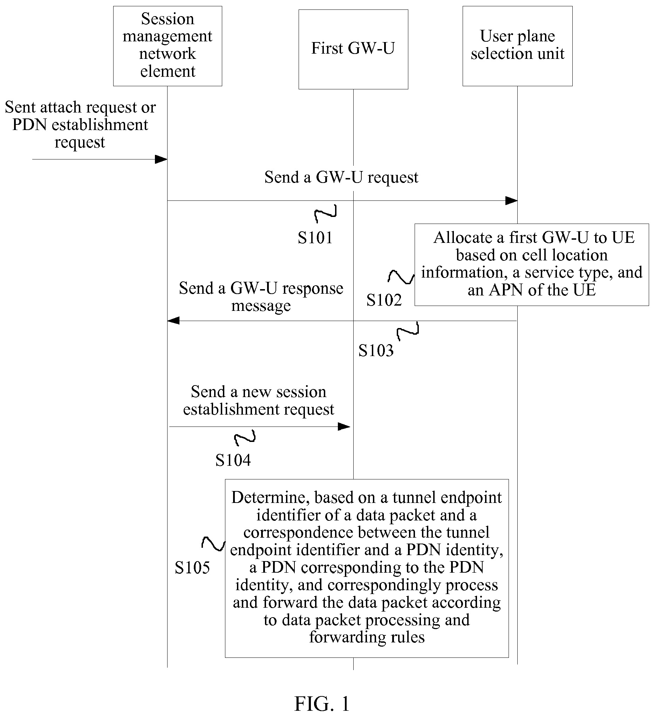

FIG. 1 is a schematic flowchart of Embodiment 1 of a method for dynamically creating a local PDN according to the present invention. In this embodiment, a user plane selection unit interacts with a session management network element in a process in which UE initiates an attach request/a PDN connection request. As shown in FIG. 1, the method includes the following steps.

S101. The session management network element sends a user plane network element selection request (GW-U request) to the user plane selection unit after receiving an attach request or a PDN establishment request sent by the UE by using a base station, where the GW-U request carries cell location information, a service type, and an APN of the UE.

S102. The user plane selection unit allocates a first GW-U to the UE based on the cell location information, the service type, and the APN of the UE.

S103. The user plane selection unit sends a GW-U response message that carries an identifier of the first GW-U to the session management network element.

S104. The session management network element sends a new session establishment request to the first GW-U, where the new session establishment request includes a tunnel endpoint identifier allocated by the session management network element to the UE, a packet data network identity, and data packet processing and forwarding rules, where the tunnel endpoint identifier is allocated by the session management network element to the UE after receiving an attach request/a new packet data network establishment request sent by the UE.

S105. The first GW-U determines, when receiving a data packet, a packet data network and data packet processing and forwarding rules based on a tunnel endpoint identifier of the data packet, a correspondence between the tunnel endpoint identifier and a PDN identity, and the data packet processing and forwarding rules, and correspondingly processes and forwards the data packet according to the data packet processing and forwarding rules.

In the method for dynamically creating a local PDN provided in this embodiment, the user plane selection unit interacts with the session management network element in the process in which the UE initiates the attach request/PDN connection request. In this way, the user plane selection unit obtains the cell location information, the service type, and the APN of the UE, and then allocates a GW-U to the UE, to complete dynamic binding of the GW-U. In addition, when sending the new session establishment request to the GW-U, the session management network element delivers, to the GW-U, processing and forwarding rules of a dynamically created local PDN corresponding to the UE, so that after receiving a data packet, the GW-U correspondingly processes and forwards the data packet according to the delivered processing and forwarding rules, thereby implementing the dynamic creation of the local PDN. In this way, a local PDN can be flexibly created anytime and anywhere, thereby overcoming limitations of the prior art in which a period for creating a local network is long and a network location is fixed.

Based on the foregoing embodiment, optionally, before S101 of sending, by the session management network element, a GW-U request to the user plane selection unit, the method may further include:
determining, by the session management network element after receiving the attach request or the PDN establishment request, the APN of the UE carried in the attach request or the PDN establishment request, and if identifying that the APN of the UE is a dynamically created local PDN, sending the GW-U request to the user plane selection unit, or if identifying that the APN of the UE is a conventional type of APN, performing processing based on an existing processing procedure.

Specifically, an APN identification function is added to the session management network element. For example, an IN-APN is used to identify a dynamically created local PDN. The IN-APN is the same as the APN in the prior art, both are character strings, and formats of the two character strings are different. Setting different formats of the two character strings can enable the session management network element to identify whether the APN of the UE is a conventional type of APN or a dynamically created local PDN. For another example, the session management network element may perform determining based on a flag bit in the APN, and if the flag bit is 1, it indicates that the APN of the UE is a dynamically created local PDN; otherwise, the APN of the UE is a conventional type of APN. The APN identification function of the session management network element can implement compatibility of two functions.

Optionally, before S 103 of allocating, by the user plane selection unit, a first GW-U to the UE based on the cell location information, the service type, and the APN of the UE, the method may further include:
searching, by the user plane selection unit, a local cache of the user plane selection unit to determine whether there is a second GW-U corresponding to the cell location information, the service type, and the APN of the UE, and if yes, using the second GW-U as the first GW-U, or if no, allocating the first GW-U to the UE, and storing a mapping relationship between the first GW-U and the cell location information, the service type, and the APN of the UE in the local cache of the user plane selection unit. The local cache is added to the user plane selection unit, to store a correspondence between a temporarily allocated GW-U and a dynamically created local PDN, so that a calculation quantity of the user plane selection unit can be effectively reduced, thereby improving processing efficiency.

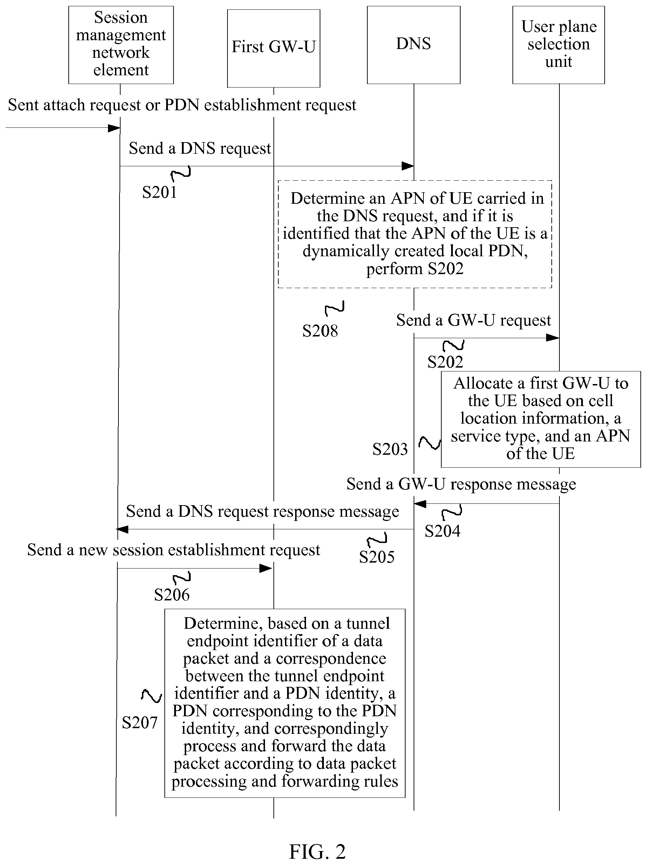

FIG. 2 is a schematic flowchart of Embodiment 2 of a method for dynamically creating a local PDN according to the present invention. In this embodiment, a user plane selection unit interacts with a DNS in a process in which UE initiates an attach request/a PDN connection request. As shown in FIG. 2, the method includes the following steps.

S201. A session management network element sends a DNS request to the DNS after receiving an attach request or a PDN establishment request sent by the UE by using a base station, where the DNS request carries cell location information, a service type, and an APN of the UE.

S202. The DNS sends a GW-U request to the user plane selection unit, where the GW-U request carries the cell location information, the service type, and the APN of the UE.

S203. The user plane selection unit allocates a first GW-U to the UE based on the cell location information, the service type, and the APN of the UE.

S204. The user plane selection unit sends a GW-U response message that carries an identifier of the first GW-U to the DNS.

S205. The DNS sends a DNS request response message to the session management network element after receiving the GW-U response message, where the DNS request response message carries the identifier of the first GW-U.

S206. The session management network element sends a new session establishment request to the first GW-U, where the new session establishment request includes a tunnel endpoint identifier allocated by the session management network element to the UE, a packet data network identity, and data packet processing and forwarding rules, where the tunnel endpoint identifier is allocated by the session management network element to the UE after receiving an attach request/a new packet data network establishment request sent by the UE.

S207. The first GW-U determines, when receiving a data packet, a packet data network and data packet processing and forwarding rules based on a tunnel endpoint identifier of the data packet, a correspondence between the tunnel endpoint identifier and a PDN identity, and the data packet processing and forwarding rules, and correspondingly processes and forwards the data packet according to the data packet processing and forwarding rules.

In the method for dynamically creating a local PDN provided in this embodiment, the user plane selection unit interacts with the DNS in the process in which the UE initiates the attach request/PDN connection request. In this way, the user plane selection unit obtains the cell location information, the service type, and the APN of the UE from the DNS by using the session management network element, and then allocates a GW-U to the UE, to complete dynamic binding of the GW-U. In addition, when sending the new session establishment request to the GW-U, the session management network element delivers, to the GW-U, processing and forwarding rules of a dynamically created local PDN corresponding to the UE, so that after receiving a data packet, the GW-U correspondingly processes and forwards the data packet according to the delivered processing and forwarding rules, thereby implementing the dynamic creation of the local PDN. In this way, a local PDN can be flexibly created anytime and anywhere, thereby overcoming limitations of the prior art in which a period for creating a local network is long and a network location is fixed.

Based on the foregoing embodiment, optionally, before S202 of sending, by the DNS, a GW-U request to the user plane selection unit, the method may further include:
S208. The DNS determines, after receiving the DNS request, the APN of the UE carried in the DNS request, and if identifying that the APN of the UE is a dynamically created local PDN, sends the GW-U request to the user plane selection unit, or if identifying that the APN of the UE is a conventional type of APN, performs processing based on an existing processing procedure.

Specifically, an APN identification function is added to the DNS. For example, an IN-APN is used to identify a dynamically created local PDN. The IN-APN is the same as the APN in the prior art, both are character strings, and formats of the two character strings are different. Setting different formats of the two character strings can enable the DNS to identify whether the APN of the UE is a conventional type of APN or a dynamically created local PDN. For another example, a GW-C may perform determining based on a flag bit in the APN, and if the flag bit is 1, it indicates that the APN of the UE is a dynamically created local PDN; otherwise, the APN of the UE is a conventional type of APN. The APN identification function of the DNS can implement compatibility of two functions.

Optionally, before S203 of allocating, by the user plane selection unit, a first GW-U to the UE based on the cell location information, the service type, and the APN of the UE, the method may further include:
searching, by the user plane selection unit, a local cache of the user plane selection unit to determine whether there is a second GW-U corresponding to the cell location information, the service type, and the APN of the UE, and if yes, using the second GW-U as the first GW-U, or if no, allocating the first GW-U to the UE, and storing a mapping relationship between the first GW-U and the cell location information, the service type, and the APN of the UE in the local cache of the user plane selection unit. The local cache is added to the user plane selection unit, to store a correspondence between a temporarily allocated GW-U and a dynamically created local PDN, so that a calculation quantity of the user plane selection unit can be effectively reduced, thereby improving processing efficiency.

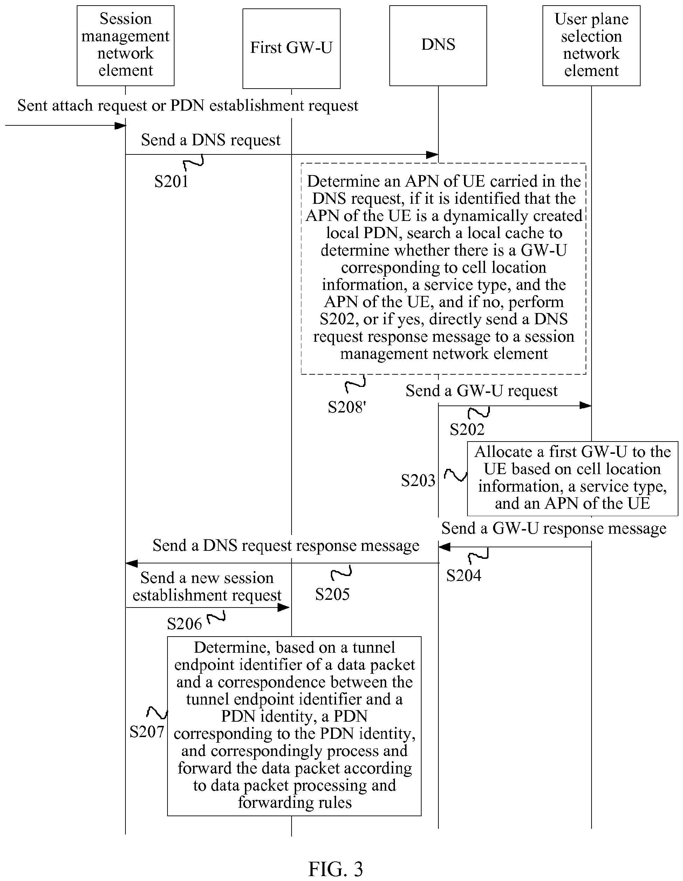

FIG. 3 is a schematic flowchart of Embodiment 3 of a method for dynamically creating a local PDN according to the present invention. In this embodiment, a user plane selection unit interacts with a DNS in a process in which UE initiates an attach request/a PDN connection request. A difference between this embodiment and the embodiment shown in FIG. 2 lies in that in an optional implementation, before S202 of sending, by the DNS, a GW-U request the user plane selection unit, the method may further include:
S208'. The DNS determines, after receiving the DNS request, the APN of the UE carried in the DNS request, and if identifying that the APN of the UE is a conventional type of APN, performs processing based on an existing processing procedure; or if identifying that the APN of the UE is a dynamically created local PDN, searches a local cache of the DNS to determine whether there is a GW-U corresponding to the cell location information, the service type, and the APN of the UE, and if no, send the GW-U request to the user plane selection unit, or if yes, directly sends a DNS request response message to the session management network element, where the DNS request response message carries an identifier of the found GW-U, and the found GW-U is used as the first GW-U.

Correspondingly, after S205 of receiving, by the DNS, the GW-U response message that carries the identifier of the first GW-U, the method further includes:
S210. The DNS stores a mapping relationship between the first GW-U and the cell location information, the service type, and the APN of the UE in the local cache of the DNS, and sends the DNS request response message to the session management network element.

Compared with the embodiment shown in FIG. 2, in this embodiment, the local cache is added to the DNS, to store a correspondence between a temporarily allocated GW-U and a dynamically created local PDN. A technical effect of this embodiment is the same as that of the embodiment shown in FIG. 2. Details are not described herein again. In a further implementation, a calculation quantity of the user plane selection unit can be effectively reduced, thereby improving processing efficiency.

The following describes in detail the technical solutions of the method embodiments shown in FIG. 1 to FIG. 3 by using several specific embodiments, with reference to a detailed processing process in which the UE initiates an attach request/a PDN connection request, and by using an example in which the session management network element is an MME and a GW-C.

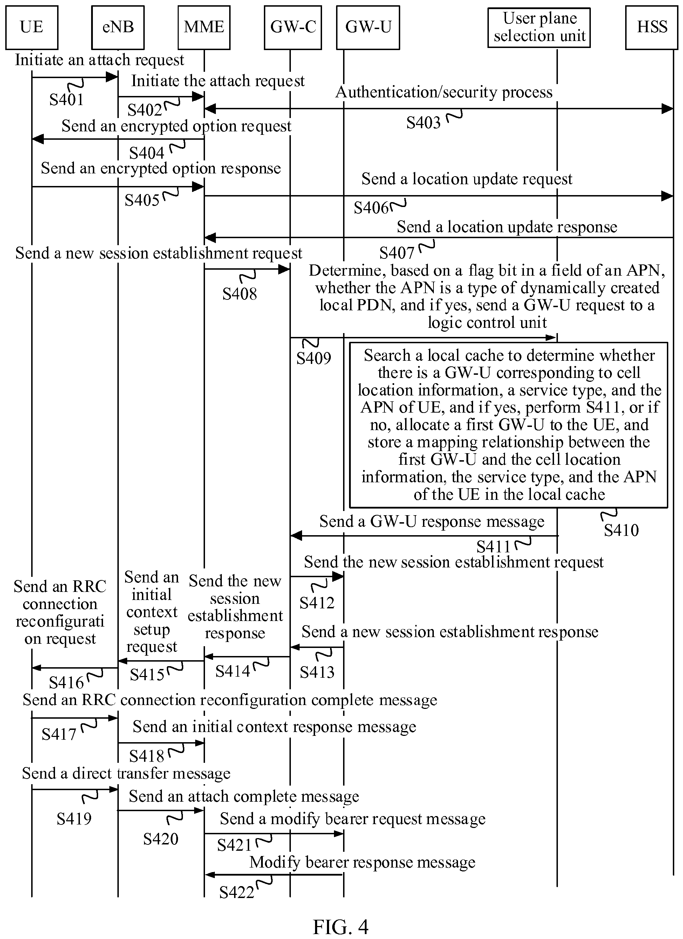

FIG. 4 is a schematic diagram of an interaction process of Embodiment 4 of a method for dynamically creating a local PDN according to the present invention. This embodiment is described by using an example in which a device is powered on and a local PDN connection is established in a UE attachment process. As shown in FIG. 4, the method includes the following steps.

S401. UE initiates an attach request to a base station (eNB).

S402. The eNB initiates the attach request to an MME, and reports cell location information and a service type of the UE.

S403. The MME initiates an authentication/security process to a home network server (Home Subscriber Server, HSS for short).

S404. The MME sends an encrypted option request to the UE to obtain an encrypted option.

S405. The UE sends an encrypted option response to the MME, where the encrypted option response includes an APN or does not include an APN.

S406. The MME sends a location update request to the HSS.

S407. The HSS sends a location update response to the MME, to send a subscription APN to the MME. If the encrypted option response in S405 includes an APN, the MME compares the subscription APN delivered by the HSS with the APN reported by the UE. If the APN reported by the UE is not allowed by the subscription, or the HSS rejects the location update, the MME rejects the attach request of the UE and gives an appropriate reason. If the encrypted option response in S405 does not include an APN, the MME obtains the subscription APN in the location update response returned by the HSS, for use in a subsequent procedure.

S408. The MME sends a new session establishment request to a GW-C, where the new session establishment request carries the cell location information, the service type, and the APN of the UE.

S409. The GW-C determines, based on a flag bit in a field of the reported APN, whether the APN is a type of dynamically created local PDN, and if yes, sends a GW-U request to a logic control unit.

S410. A user plane selection unit searches a local cache of the user plane selection unit to determine whether there is a GW-U corresponding to the cell location information, the service type, and the APN of the UE, and if yes, performs S411, or if no, allocates a first GW-U to the UE, and stores a mapping relationship between the first GW-U and the cell location information, the service type, and the APN of the UE in the local cache of the user plane selection unit.

S411. Send a GW-U response message to the GW-C, where the GW-U response message carries an identifier of the found GW-U or an identifier of the first GW-U.

S412. The GW-C sends a new session establishment request to the GW-U corresponding to the identifier that is of the GW-U and that is carried in the GW-U response message, and allocates a tunnel endpoint identifier to the GW-U, where the new session establishment request includes the tunnel endpoint identifier that is of the GW-U and that is allocated by the GW-C to the UE, a PDN identity, and data packet processing and forwarding rules.

Specifically, when a data packet that carries the tunnel endpoint identifier allocated by the GW-C to the GW-U reaches the GW-U, the GW-U encapsulates the PDN identity in the data packet. There is a correspondence between the tunnel endpoint identifier and the PDN network that corresponds to the PDN identity, and different PDN networks have different processing rules. When receiving the data packet, the GW-U finds corresponding data packet processing and forwarding rules based on the tunnel endpoint identifier of the UE, and correspondingly processes and forwards the data packet, where a forwarding rule includes a PDN network to which the data packet should be sent.

S413. The GW-U sends a new session establishment response to the GW-C.

S414. The GW-C sends the new session establishment response to the MME, and sends an IP address and the tunnel endpoint identifier of the GW-U to the MME.

S415. The MME sends an initial context setup request to the eNB, and also sends an attach accept message, including a message such as the tunnel endpoint identifier that is of the GW-U and that is allocated by the GW-C to the UE and the IP address of the GW-U.

S416. The eNB sends an RRC connection reconfiguration request to the UE, to reconfigure an RRC connection.

S417. The UE sends an RRC connection reconfiguration complete message to the eNB.

S418. The eNB sends an initial context response message to the MME, where the message includes a tunnel endpoint identifier of the eNB and an IP address of the eNB that are used for transmitting downlink data between the eNB and the GW-U.

S419. The UE sends a direct transfer message to the eNB, including an attach complete message.

S420. The eNB sends the attach complete message to the MME.

S421. The MME sends a modify bearer request message to the GW-U, where the modify bearer request message carries the IP address of the eNB and the tunnel endpoint identifier of the eNB.

S422. The GW-U sends a modify bearer response message to the MME.

In this embodiment, an APN identification function is added to the GW-C, to identify whether the APN is a conventional type of APN or a type of dynamically created local PDN, and different processing procedures are performed based on an identification result. In addition, the local cache is added to the user plane selection unit, to store a correspondence between a temporarily allocated GW-C and a dynamically created local PDN, so that a calculation quantity of the user plane selection unit is effectively reduced.

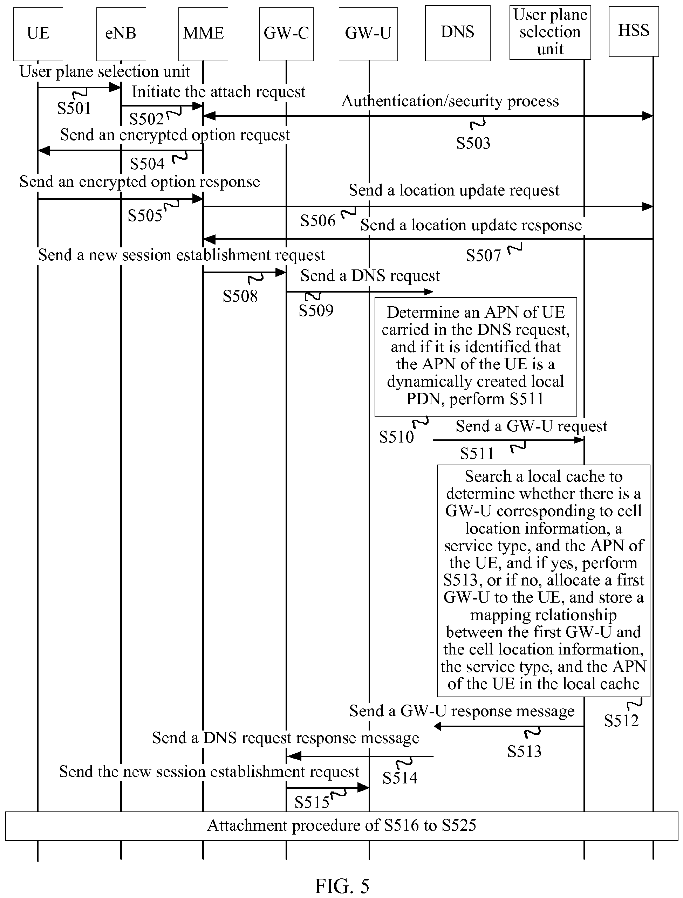

FIG. 5 is a schematic diagram of an interaction process of Embodiment 5 of a method for dynamically creating a local PDN according to the present invention. This embodiment is described by using an example in which a device is powered on and a local PDN connection is established in a UE attachment process. As shown in FIG. 5, the method includes the following steps.

An attachment process of S501 to S508 is the same as that of S401 to S408 in the embodiment shown in FIG. 4 as follows:
S501. UE initiates an attach request to a base station (eNB).
S502. The eNB initiates the attach request to an MME, and reports cell location information and a service type of the UE.
S503. The MME initiates an authentication/security process to a home network server (Home Subscriber Server, HSS for short).
S504. The MME sends an encrypted option request to the UE to obtain an encrypted option.
S505. The UE sends an encrypted option response to the MME, where the encrypted option response includes an APN or does not include an APN.
S506. The MME sends a location update request to the HSS.
S507. The HSS sends a location update response to the MME, to send a subscription APN to the MME. If the encrypted option response in S405 includes an APN, the MME compares the subscription APN delivered by the HSS with the APN reported by the UE. If the APN reported by the UE is not allowed by the subscription, or the HSS rejects the location update, the MME rejects the attach request of the UE and gives an appropriate reason. If the encrypted option response in S405 does not include an APN, the MME obtains the subscription APN in the location update response returned by the HSS, for use in a subsequent procedure.
S508. The MME sends a new session establishment request to a GW-C, where the new session establishment request carries the cell location information, the service type, and the APN of the UE.
S509. The GW-C sends a DNS request to a DNS, where the DNS request carries the cell location information, the service type, and the APN of the UE.
S510. The DNS determines, after receiving the DNS request, the APN of the UE carried in the DNS request, and if identifying that the APN of the UE is a dynamically created local PDN, performs S511, or if identifying that the APN of the UE is a conventional type of APN, performs processing based on an existing processing procedure.
S511. The DNS sends a GW-U request to a user plane selection unit, where the GW-U request carries the cell location information, the service type, and the APN of the UE.
S512. The user plane selection unit searches a local cache of the user plane selection unit to determine whether there is a GW-U corresponding to the cell location information, the service type, and the APN of the UE, and if yes, performs S513, or if no, allocates a first GW-U to the UE, and stores a mapping relationship between the first GW-U and the cell location information, the service type, and the APN of the UE in the local cache of the user plane selection unit.
S513. The user plane selection unit sends a GW-U response message to the DNS, where the GW-U response message carries an identifier of the found GW-U or an identifier of the first GW-U.
S514. The DNS sends a DNS request response message to the GW-C after receiving the GW-U response message, where the DNS request response message carries the identifier of the found GW-U or the identifier of the first GW-U.
S515. The GW-C sends a new session establishment request to the GW-U corresponding to the identifier that is of the GW-U and that is carried in the GW-U response message, and allocates a tunnel endpoint identifier to the GW-U, where the new session establishment request includes the tunnel endpoint identifier that is of the GW-U and that is allocated by the GW-C to the UE, a PDN identity, and data packet processing and forwarding rules.

Specifically, when a data packet that carries the tunnel endpoint identifier allocated by the GW-C to the GW-U reaches the GW-U, the GW-U encapsulates the PDN identity in the data packet. There is a correspondence between the tunnel endpoint identifier and the PDN network that corresponds to the PDN identity, and different PDN networks have different processing rules. When receiving the data packet, the GW-U finds corresponding processing and forwarding rules based on the tunnel endpoint identifier of the UE, and correspondingly processes and forwards the data packet, where a forwarding rule includes a PDN network to which the data packet should be sent.

A subsequent attachment procedure of S516 to S525 is the same as that shown in FIG. 4. For details, refer to S415 to 422 shown in FIG. 4. Details are not described herein again.

In this embodiment, an APN identification function is added to the DNS, to identify whether the APN is a conventional type of APN or a type of dynamically created local PDN, and different processing procedures are performed based on an identification result. In addition, the local cache is added to the user plane selection unit, to store a correspondence between a temporarily allocated GW-U and a dynamically created local PDN, so that a calculation quantity of the user plane selection unit is effectively reduced.

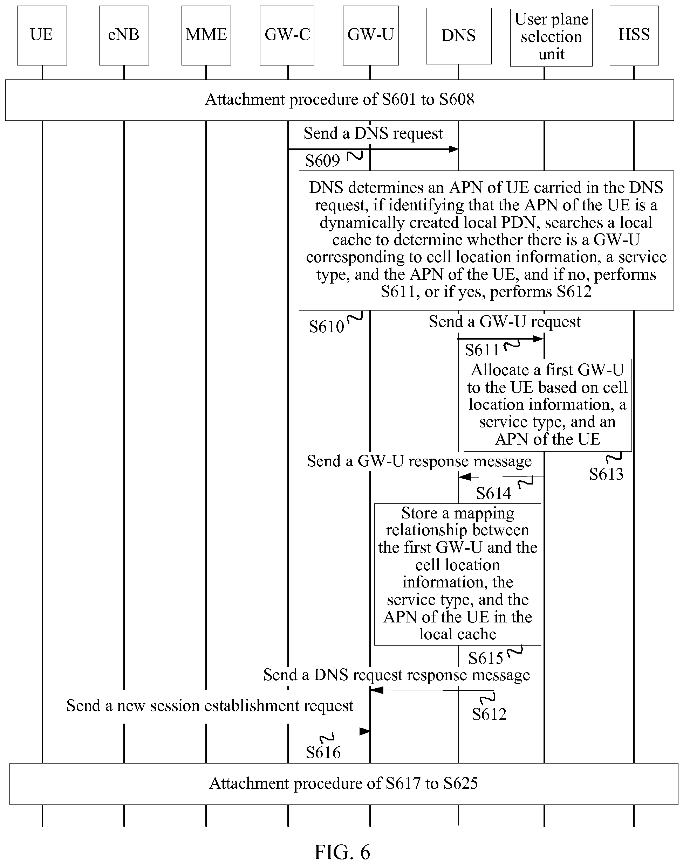

FIG. 6 is a schematic diagram of an interaction process of Embodiment 6 of a method for dynamically creating a local PDN according to the present invention. This embodiment is described by using an example in which a device is powered on and a local PDN connection is established in a UE attachment process. As shown in FIG. 6, the method includes the following steps.

An attachment process of S601 to S608 is the same as that of S401 to S408 in the embodiment shown in FIG. 4. For details, refer to S401 to S408 in the embodiment shown in FIG. 4. Details are not described herein again.

S609. The GW-C sends a DNS request to a DNS, where the DNS request carries the cell location information, the service type, and the APN of the UE.

S610. The DNS determines, after receiving the DNS request, the APN of the UE carried in the DNS request, and if identifying that the APN of the UE is a conventional type of APN, performs processing based on an existing processing procedure; or if identifying that the APN of the UE is a type of dynamically created local PDN, first searches a local cache of the DNS to determine whether there is a GW-U corresponding to the cell location information, the service type, and the APN of the UE, and if no, performs S611 to send a GW-U request to a user plane selection unit, or if yes, performs S612.

S611. Send the GW-U request to the user plane selection unit, and then perform S613.

S612. Directly send a DNS request response message to the GW-C, where the DNS request response message carries an identifier of the found GW-U.

S613. The user plane selection unit allocates a first GW-U to the UE based on the cell location information, the service type, and the APN of the UE.

S614. The user plane selection unit sends a GW-U response message that carries an identifier of the first GW-U to the DNS.

S615. The DNS stores a mapping relationship between the first GW-U and the cell location information, the service type, and the APN of the UE in the local cache of the DNS, and then performs S612'.

S612'. Send a DNS request response message to the GW-C, where the DNS request response message carries the identifier of the first GW-U.

S616. The GW-C sends a new session establishment request to the GW-U corresponding to the identifier that is of the GW-U and that is carried in the GW-U response message, and allocates a tunnel endpoint identifier of the GW-U to the UE, where the new session establishment request includes a correspondence between the tunnel endpoint identifier that is of the GW-U and that is allocated by the GW-C to the UE and a PDN identity, and a related forwarding rule corresponding to a PDN.

Specifically, when a data packet that carries the tunnel endpoint identifier of the GW-U allocated by the GW-C to the UE reaches the GW-U, the GW-U encapsulates the PDN identity in the data packet. There is a correspondence between the tunnel endpoint identifier and the PDN network that corresponds to the PDN identity, and different PDN networks have different processing rules. When receiving the data packet, the GW-U finds a corresponding PDN network identity based on the tunnel endpoint identifier of the UE, and performs processing and forwarding according to the forwarding rule corresponding to the PDN network.

A subsequent attachment procedure of S617 to S625 is the same as that shown in FIG. 4. For details, refer to S415 to 422 shown in FIG. 4. Details are not described herein again.

In this embodiment, an APN identification function is added to the DNS, to identify whether the APN is a conventional type of APN or a type of dynamically created local PDN, and different processing procedures are performed based on an identification result. In addition, the local cache is added to the DNS, to store a correspondence between a temporarily allocated GW-U and a dynamically created local PDN, so that a calculation quantity of the user plane selection unit is effectively reduced.

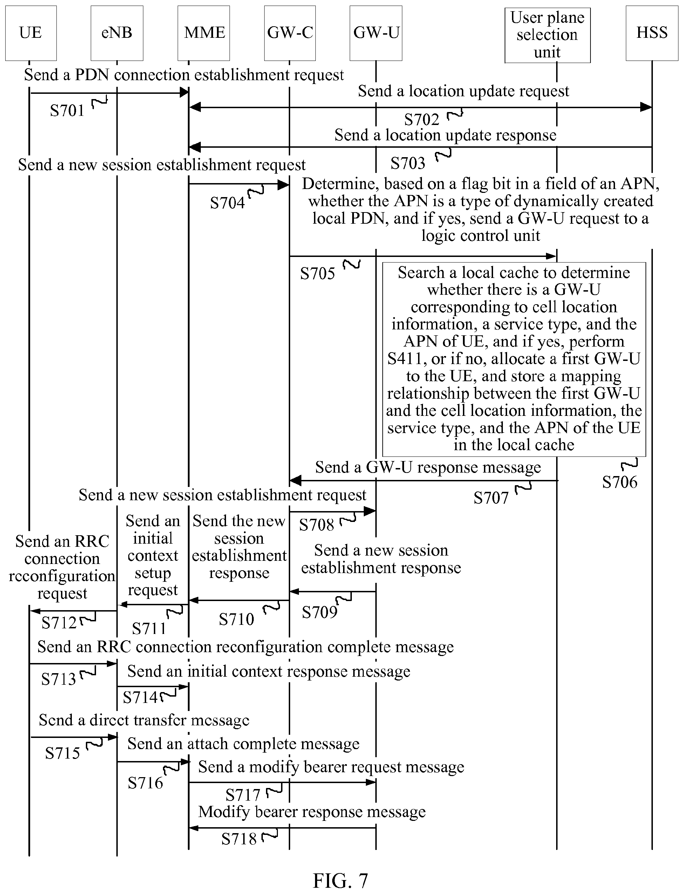

FIG. 7 is a schematic diagram of an interaction process of Embodiment 7 of a method for dynamically creating a local PDN according to the present invention. This embodiment is described by using an example in which an application function is implemented by using a terminal APP, when UE enables an application APP, a new PDN establishment request is initiated, and the new PDN establishment request triggers completion of dynamic creation of a local PDN. A difference between this embodiment and the embodiment shown in FIG. 4 lies in that the attachment procedure is changed to a PDN establishment procedure. As shown in FIG. 7, the method includes the following steps.

S701. The UE sends a PDN connection establishment request to an MME, where the PDN connection establishment request carries an APN, and the APN is a mandatory option, associated with an APP.

S702. The MME initiates a location update request to an HSS after receiving the PDN connection establishment request, where the location update request carries information about an international mobile subscriber identity (International Mobile Subscriber Identity, IMSI for short hereinafter) of the UE.

S703. The HSS returns a location update response, and the location update response carries subscription information.

S704. The MME determines, based on the subscription information, whether the APN carried by the UE is valid, and if no, rejects the PDN establishment request; or if yes, continues to send a new session establishment request to a GW-C, where the new session establishment request carries cell location information, a service type, and the APN of the UE.

A subsequent processing process of S705 to S718 is the same as that of S409 to S422 shown in FIG. 4. Details are not described herein again.

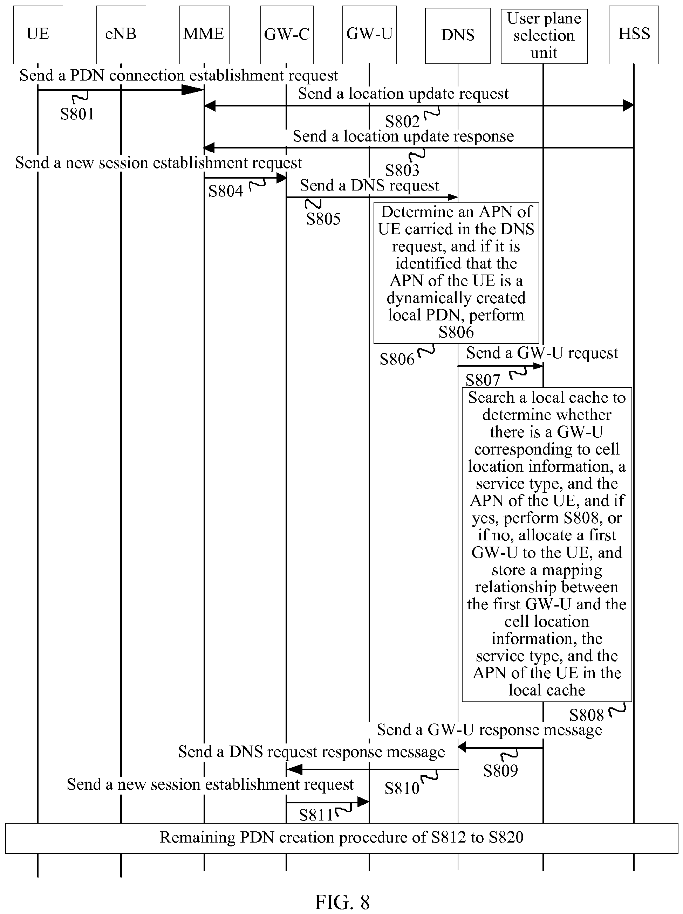

FIG. 8 is a schematic diagram of an interaction process of Embodiment 8 of a method for dynamically creating a local PDN according to the present invention. This embodiment is described by using an example in which an application function is implemented by using a terminal APP, when UE enables an application APP, a new PDN establishment request is initiated, and the new PDN establishment request triggers completion of dynamic creation of a local PDN. A difference between this embodiment and the embodiment shown in FIG. 5 lies in that the attachment procedure is changed to a PDN establishment procedure. As shown in FIG. 8, the method includes the following steps.

S801. The UE sends a PDN connection establishment request to an MME, where the PDN connection establishment request carries an APN, and the APN is a mandatory option, associated with an APP.

S802. The MME initiates a location update request to an HSS after receiving the PDN connection establishment request, where the location update request carries information about an IMSI of the UE.

S803. The HSS returns a location update response, and the location update response carries subscription information.

S804. The MME determines, based on the subscription information, whether the APN carried by the UE is valid, and if no, rejects the PDN establishment request; or if yes, continues to send a new session establishment request to a GW-C, where the new session establishment request carries cell location information, a service type, and the APN of the UE.

A subsequent processing process of S805 to S820 is the same as that of S509 to S525 shown in FIG. 5. Details are not described herein again.

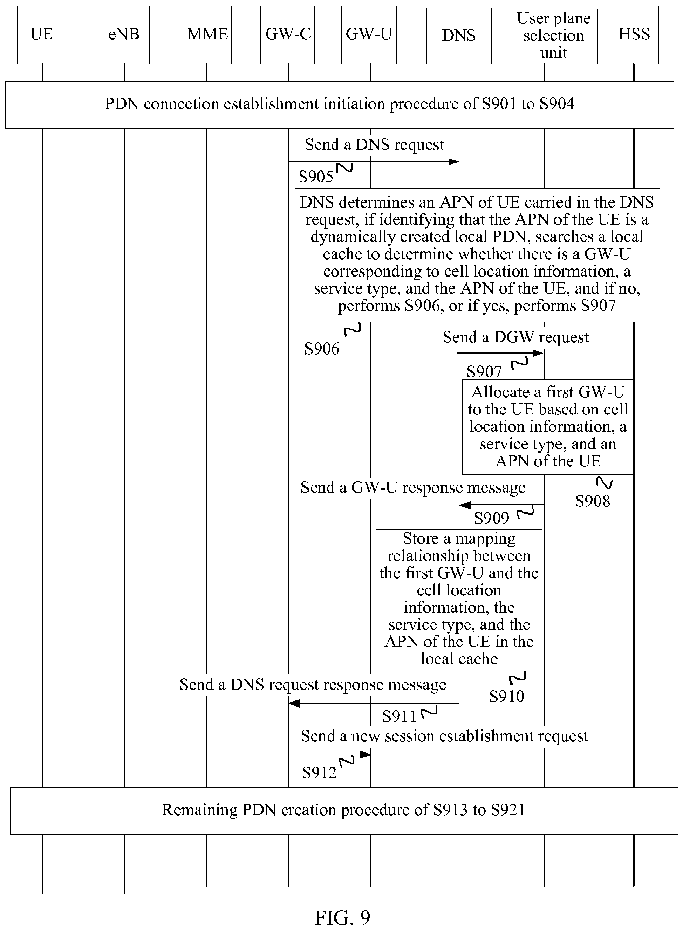

FIG. 9 is a schematic diagram of an interaction process of Embodiment 9 of a method for dynamically creating a local PDN according to the present invention. This embodiment is described by using an example in which an application function is implemented by using a terminal APP, when UE enables an application APP, a new PDN establishment request is initiated, and the new PDN establishment request triggers completion of dynamic creation of a local PDN. A difference between this embodiment and the embodiment shown in FIG. 6 lies in that the attachment procedure is changed to a PDN establishment procedure. As shown in FIG. 9, the method includes the following steps.

S901. The UE sends a PDN connection establishment request to an MME, where the PDN connection establishment request carries an APN, and the APN is a mandatory option, associated with an APP.

S902. The MME initiates a location update request to an HSS after receiving the PDN connection establishment request, where the location update request carries information about an IMSI of the UE.

S903. The HSS returns a location update response, and the location update response carries subscription information.

S904. The MME determines, based on the subscription information, whether the APN carried by the UE is valid, and if no, rejects the PDN establishment request; or if yes, continues to send a new session establishment request to a GW-C, where the new session establishment request carries cell location information, a service type, and the APN of the UE.

A subsequent processing process of S905 to S921 is the same as that of S609 to S625 shown in FIG. 6. Details are not described herein again.

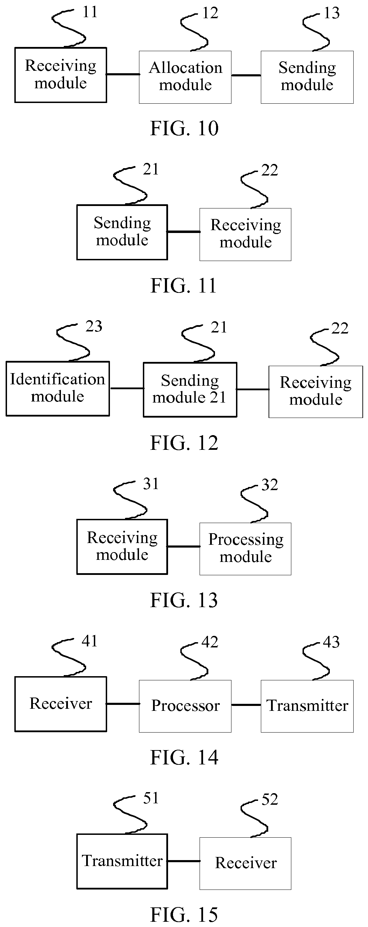

FIG. 10 is a schematic structural diagram of Embodiment 1 of a user plane selection unit according to the present invention. As shown in FIG. 10, the user plane selection unit in this embodiment includes: a receiving module 11, an allocation module 12, and a sending module 13. The receiving module 11 is configured to receive a user plane network element selection request, where the user plane network element selection request carries cell location information, a service type, and an access point name of user equipment UE. The allocation module 12 is configured to allocate a first user plane network element to the UE based on the cell location information, the service type, and the access point name of the UE. The sending module 13 is configured to send a user plane network element response message that carries an identifier of the first user plane network element to a session management network element, so that the session management network element sends a new session establishment request to the first user plane network element, where the new session establishment request includes a tunnel endpoint identifier allocated by the session management network element to the UE, a packet data network identity, and data packet processing and forwarding rules, where the tunnel endpoint identifier is allocated by the session management network element to the UE after receiving an attach request/a new packet data network establishment request sent by the UE.

Further, the allocation module 12 is specifically configured to: search a local cache of the user plane selection unit to determine whether there is a second user plane network element corresponding to the cell location information, the service type, and the access point name of the UE, and if yes, use the second user plane network element as the first user plane network element, or if no, allocate the first user plane network element to the UE, and store a mapping relationship between the first user plane network element and the cell location information, the service type, and the access point name of the UE in the local cache of the user plane selection unit.

Optionally, the user plane network element selection request is sent by the session management network element when identifying, after receiving the attach request/new packet data network establishment request, that the access point name of the UE carried in the attach request/new packet data network establishment request is a dynamically created local packet data network.

Optionally, the user plane network element selection request is sent by a domain name system after receiving a domain name system request sent by the session management network element, where the domain name system request is sent by the session management network element after receiving the attach request/new packet data network establishment request. The sending module 13 is specifically configured to: send the user plane network element response message that carries the identifier of the first user plane network element to the domain name system, so that the domain name system sends a domain name system request response message to the session management network element after receiving the user plane network element response message, where the domain name system request response message carries the identifier of the first user plane network element.

Optionally, the user plane network element selection request is sent by the domain name system when identifying, after receiving the domain name system request sent by the session management network element, that the access point name of the UE carried in the domain name system request is a dynamically created local packet data network.

Optionally, the user plane network element selection request is sent by the domain name system when identifying, after receiving the domain name system request sent by the session management network element, that the access point name of the UE carried in the domain name system request is a dynamically created local packet data network, and when finding no third user plane network element corresponding to the cell location information, the service type, and the access point name of the UE in a local cache of the domain name system. The sending module 13 is specifically configured to: send the user plane network element response message that carries the identifier of the first user plane network element to the domain name system, so that the domain name system stores a mapping relationship between the first user plane network element and the cell location information, the service type, and the access point name of the UE in the local cache of the domain name system after receiving the user plane network element response message, and sends the domain name system request response message to the session management network element, where the domain name system request response message carries the identifier of the first user plane network element.

The session management network element is a control plane gateway or a mobility management network element, or the session management network element is a control plane gateway and a mobility management network element.

The user plane selection unit in this embodiment may be configured to execute the technical solution of the foregoing method embodiment, and their implementation principles are similar. Details are not described herein again.

According to the user plane selection unit provided in this embodiment, the user plane selection unit interacts with the session management network element in a process in which the UE initiates an attach request/a PDN connection request. In this way, the user plane selection unit obtains the cell location information, the service type, and the APN of the UE, and then allocates a GW-U to the UE, to complete dynamic binding of the GW-U. In addition, when sending the new session establishment request to the GW-U, the session management network element delivers, to the GW-U, processing and forwarding rules of a dynamically created local PDN corresponding to the UE, so that after receiving a data packet, the GW-U correspondingly processes and forwards the data packet according to the delivered processing and forwarding rules, thereby implementing dynamic creation of the local PDN. In this way, a local PDN can be flexibly created anytime and anywhere, thereby overcoming limitations of the prior art in which a period for creating a local network is long and a network location is fixed.

FIG. 11 is a schematic structural diagram of Embodiment 1 of a session management network element according to the present invention. As shown in FIG. 11, a user plane selection unit in this embodiment includes a sending module 21 and a receiving module 22. The sending module 21 is configured to send a user plane network element selection request to a user plane selection unit, where the user plane network element selection request carries cell location information, a service type, and an access point name of UE, so that the user plane selection unit allocates a first user plane network element to the UE based on the cell location information, the service type, and the access point name of the UE. The receiving module 22 is configured to receive a user plane network element response message that carries an identifier of the first user plane network element and that is sent by the user plane selection unit. The sending module 21 is further configured to send a new session establishment request to the first user plane network element, where the new session establishment request includes a tunnel endpoint identifier allocated by the session management network element to the UE, a packet data network identity, and data packet processing and forwarding rules, where the tunnel endpoint identifier is allocated by the session management network element to the UE after receiving an attach request/a new packet data network establishment request sent by the UE.

Optionally, the first user plane network element is found by the user plane selection unit in a local cache of the user plane selection unit based on a mapping relationship between a user plane network element and the cell location information, the service type, and the access point name of the UE before allocating the first user plane network element to the UE.

FIG. 12 is a schematic structural diagram of Embodiment 2 of a session management network element according to the present invention. As shown in FIG. 12, based on the session management network element shown in FIG. 11, a user plane selection unit in this embodiment further includes an identification module 23. The identification module 23 is configured to: before the sending module 21 sends the user plane network element selection request to the user plane selection unit, identify that the access point name of the UE carried in the attach request/new packet data network establishment request is a dynamically created local packet data network.

In the user plane selection unit shown in FIG. 11 or FIG. 12, optionally, the sending module 21 is specifically configured to: send a domain name system request to a domain name system, so that the domain name system sends the user plane network element selection request to the user plane selection unit. Correspondingly, the receiving module 22 is specifically configured to: receive a domain name system request response message sent by the domain name system after receiving the user plane network element response message, where the domain name system request response message carries the identifier of the first user plane network element.

In the user plane selection unit shown in FIG. 11 or FIG. 12, optionally, the sending module 21 is specifically configured to send the domain name system request to the domain name system, so that the domain name system sends the user plane network element selection request to the user plane selection unit when identifying that the access point name of the UE carried in the domain name system request is a dynamically created local packet data network. Correspondingly, the receiving module 22 is specifically configured to: receive the domain name system request response message sent by the domain name system after receiving the user plane network element response message, where the domain name system request response message carries the identifier of the first user plane network element.

In the user plane selection unit shown in FIG. 11 or FIG. 12, optionally, the sending module 21 is specifically configured to send a domain name system request to a domain name system, so that when identifying that the access point name of the UE carried in the domain name system request is a dynamically created local packet data network, the domain name system searches a local cache of the domain name system to determine whether there is a user plane network element corresponding to the cell location information, the service type, and the access point name of the UE, and if no, sends the user plane network element selection request to the user plane selection unit, or if yes, directly sends a domain name system request response message to the session management network element, where the DNS request response message carries an identifier of the found user plane network element, and the found user plane network element is used as the first user plane network element. Correspondingly, the receiving module 22 is specifically configured to: receive a domain name system request response message sent by the domain name system after storing a mapping relationship between the first user plane network element and the cell location information, the service type, and the access point name of the UE in a local cache of the domain name system after receiving the user plane network element response message, where the domain name system request response message carries the identifier of the first user plane network element.

The session management network element is a control plane gateway or a mobility management network element, or the session management network element is a control plane gateway and a mobility management network element.

The session management network element in this embodiment may be configured to execute the technical solution of the foregoing method embodiment, and their implementation principles are similar. Details are not described herein again.

According to the session management network element provided in this embodiment, the user plane selection unit interacts with the session management network element in a process in which the UE initiates an attach request/a PDN connection request. In this way, the user plane selection unit obtains the cell location information, the service type, and the APN of the UE, and then allocates a GW-U to the UE, to complete dynamic binding of the GW-U. In addition, when sending the new session establishment request to the GW-U, the session management network element delivers, to the GW-U, processing and forwarding rules of a dynamically created local PDN corresponding to the UE, so that after receiving a data packet, the GW-U correspondingly processes and forwards the data packet according to the delivered processing and forwarding rules, thereby implementing dynamic creation of the local PDN. In this way, a local PDN can be flexibly created anytime and anywhere, thereby overcoming limitations of the prior art in which a period for creating a local network is long and a network location is fixed.

FIG. 13 is a schematic structural diagram of Embodiment 1 of a user plane network element according to the present invention. As shown in FIG. 13, the user plane network element in this embodiment includes a receiving module 31 and a processing module 32. The receiving module 31 is configured to receive a new session establishment request sent by a session management network element, where the new session establishment request includes a tunnel endpoint identifier allocated by the session management network element to UE, a packet data network identity, and data packet processing and forwarding rules, where the tunnel endpoint identifier is allocated by the session management network element to the UE after receiving an attach request/a new packet data network establishment request sent by the UE. The processing module 32 is configured to: find, when the receiving module receives a data packet, a packet data network identity and data packet processing and forwarding rules based on a tunnel endpoint identifier of the data packet, and correspondingly process and forward the data packet according to the data packet processing and forwarding rules, thereby implementing dynamic creation of a local PDN. In this way, a local PDN can be flexibly created anytime and anywhere, thereby overcoming limitations of the prior art in which a period for creating a local network is long and a network location is fixed.

A system for dynamically creating a local packet data network provided in the embodiments of the present invention includes the user plane selection unit shown in FIG. 10, the session management network element shown in FIG. 11 or FIG. 12, and the user plane network element shown in FIG. 13.

FIG. 14 is a schematic structural diagram of Embodiment 2 of a user plane selection unit according to the present invention. As shown in FIG. 14, the user plane selection unit in this embodiment includes: a receiver 41, a processor 42, and a transmitter 43. The receiver 41 is configured to receive a user plane network element selection request, where the user plane network element selection request carries cell location information, a service type, and an access point name of user equipment UE. The processor 42 is configured to allocate a first user plane network element to the UE based on the cell location information, the service type, and the access point name of the UE. The transmitter 43 is configured to send a user plane network element response message that carries an identifier of the first user plane network element to a session management network element, so that the session management network element sends a new session establishment request to the first user plane network element, where the new session establishment request includes a tunnel endpoint identifier allocated by the session management network element to the UE, a packet data network identity, and data packet processing and forwarding rules, where the tunnel endpoint identifier is allocated by the session management network element to the UE after receiving an attach request/a new packet data network establishment request sent by the UE.

Further, the processor 42 is specifically configured to: search a local cache of the user plane selection unit to determine whether there is a second user plane network element corresponding to the cell location information, the service type, and the access point name of the UE, and if yes, use the second user plane network element as the first user plane network element, or if no, allocate the first user plane network element to the UE, and store a mapping relationship between the first user plane network element and the cell location information, the service type, and the access point name of the UE in the local cache of the user plane selection unit.

Optionally, the user plane network element selection request is sent by the session management network element when identifying, after receiving the attach request/new packet data network establishment request, that the access point name of the UE carried in the attach request/new packet data network establishment request is a dynamically created local packet data network.

Optionally, the user plane network element selection request is sent by a domain name system after receiving a domain name system request sent by the session management network element, where the domain name system request is sent by the session management network element after receiving the attach request/new packet data network establishment request. The transmitter 43 is specifically configured to: send the user plane network element response message that carries the identifier of the first user plane network element to the domain name system, so that the domain name system sends a domain name system request response message to the session management network element after receiving the user plane network element response message, where the domain name system request response message carries the identifier of the first user plane network element.

Optionally, the user plane network element selection request is sent by the domain name system when identifying, after receiving the domain name system request sent by the session management network element, that the access point name of the UE carried in the domain name system request is a dynamically created local packet data network.

Optionally, the user plane network element selection request is sent by the domain name system when identifying, after receiving the domain name system request sent by the session management network element, that the access point name of the UE carried in the domain name system request is a dynamically created local packet data network, and when finding no third user plane network element corresponding to the cell location information, the service type, and the access point name of the UE in a local cache of the domain name system. The transmitter 43 is specifically configured to: send the user plane network element response message that carries the identifier of the first user plane network element to the domain name system, so that the domain name system stores a mapping relationship between the first user plane network element and the cell location information, the service type, and the access point name of the UE in the local cache of the domain name system after receiving the user plane network element response message, and sends the domain name system request response message to the session management network element, where the domain name system request response message carries the identifier of the first user plane network element.

The session management network element is a control plane gateway or a mobility management network element, or the session management network element is a control plane gateway and a mobility management network element.

The user plane selection unit in this embodiment may be configured to execute the technical solution of the foregoing method embodiment, and their implementation principles are similar. Details are not described herein again.

According to the user plane selection unit provided in this embodiment, the user plane selection unit interacts with the session management network element in a process in which the UE initiates an attach request/a PDN connection request. In this way, the user plane selection unit obtains the cell location information, the service type, and the APN of the UE, and then allocates a GW-U to the UE, to complete dynamic binding of the GW-U. In addition, when sending the new session establishment request to the GW-U, the session management network element delivers, to the GW-U, processing and forwarding rules of a dynamically created local PDN corresponding to the UE, so that after receiving a data packet, the GW-U correspondingly processes and forwards the data packet according to the delivered processing and forwarding rules, thereby implementing dynamic creation of the local PDN. In this way, a local PDN can be flexibly created anytime and anywhere, thereby overcoming limitations of the prior art in which a period for creating a local network is long and a network location is fixed.

FIG. 15 is a schematic structural diagram of Embodiment 3 of a session management network element according to the present invention. As shown in FIG. 15, a user plane selection unit in this embodiment includes a transmitter 51 and a receiver 52. The transmitter 51 is configured to send a user plane network element selection request to a user plane selection unit, where the user plane network element selection request carries cell location information, a service type, and an access point name of UE, so that the user plane selection unit allocates a first user plane network element to the UE based on the cell location information, the service type, and the access point name of the UE. The receiver 52 is configured to receive a user plane network element response message that carries an identifier of the first user plane network element and that is sent by the user plane selection unit. The transmitter 51 is further configured to send a new session establishment request to the first user plane network element, where the new session establishment request includes a tunnel endpoint identifier allocated by the session management network element to the UE, a packet data network identity, and data packet processing and forwarding rules, where the tunnel endpoint identifier is allocated by the session management network element to the UE after receiving an attach request/a new packet data network establishment request sent by the UE.

Optionally, the first user plane network element is found by the user plane selection unit in a local cache of the user plane selection unit based on a mapping relationship between a user plane network element and the cell location information, the service type, and the access point name of the UE before allocating the first user plane network element to the UE.

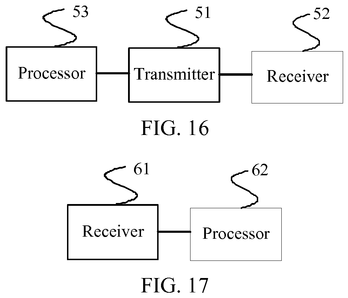

FIG. 16 is a schematic structural diagram of Embodiment 4 of a session management network element according to the present invention. As shown in FIG. 16, based on the session management network element shown in FIG. 15, a user plane selection unit in this embodiment further includes a processor 53. The processor 53 is configured to: before the transmitter 51 sends the user plane network element selection request to the user plane selection unit, identify that the access point name of the UE carried in the attach request/new packet data network establishment request is a dynamically created local packet data network.

In the user plane selection unit shown in FIG. 15 or FIG. 16, optionally, the transmitter 51 is specifically configured to: send a domain name system request to a domain name system, so that the domain name system sends the user plane network element selection request to the user plane selection unit. Correspondingly, the receiver 52 is specifically configured to: receive a domain name system request response message sent by the domain name system after receiving the user plane network element response message, where the domain name system request response message carries the identifier of the first user plane network element.

In the user plane selection unit shown in FIG. 15 or FIG. 16, optionally, the transmitter 51 is specifically configured to send the domain name system request to the domain name system, so that the domain name system sends the user plane network element selection request to the user plane selection unit when identifying that the access point name of the UE carried in the domain name system request is a dynamically created local packet data network. Correspondingly, the receiver 52 is specifically configured to: receive the domain name system request response message sent by the domain name system after receiving the user plane network element response message, where the domain name system request response message carries the identifier of the first user plane network element.

In the user plane selection unit shown in FIG. 15 or FIG. 16, optionally, the transmitter 51 is specifically configured to send a domain name system request to a domain name system, so that when identifying that the access point name of the UE carried in the domain name system request is a dynamically created local packet data network, the domain name system searches a local cache of the domain name system to determine whether there is a user plane network element corresponding to the cell location information, the service type, and the access point name of the UE, and if no, sends the user plane network element selection request to the user plane selection unit, or if yes, directly sends a domain name system request response message to the session management network element, where the DNS request response message carries an identifier of the found user plane network element, and the found user plane network element is used as the first user plane network element. Correspondingly, the receiver 52 is specifically configured to: receive a domain name system request response message sent by the domain name system after storing a mapping relationship between the first user plane network element and the cell location information, the service type, and the access point name of the UE in a local cache of the domain name system after receiving the user plane network element response message, where the domain name system request response message carries the identifier of the first user plane network element.

The session management network element is a control plane gateway or a mobility management network element, or the session management network element is a control plane gateway and a mobility management network element.

The session management network element in this embodiment may be configured to execute the technical solution of the foregoing method embodiment, and their implementation principles are similar. Details are not described herein again.

According to the session management network element provided in this embodiment, the user plane selection unit interacts with the session management network element in a process in which the UE initiates an attach request/a PDN connection request. In this way, the user plane selection unit obtains the cell location information, the service type, and the APN of the UE, and then allocates a GW-U to the UE, to complete dynamic binding of the GW-U. In addition, when sending the new session establishment request to the GW-U, the session management network element delivers, to the GW-U, processing and forwarding rules of a dynamically created local PDN corresponding to the UE, so that after receiving a data packet, the GW-U correspondingly processes and forwards the data packet according to the delivered processing and forwarding rules, thereby implementing dynamic creation of the local PDN. In this way, a local PDN can be flexibly created anytime and anywhere, thereby overcoming limitations of the prior art in which a period for creating a local network is long and a network location is fixed.

FIG. 17 is a schematic structural diagram of Embodiment 2 of a user plane network element according to the present invention. As shown in FIG. 17, the user plane network element in this embodiment includes a receiver 61 and a processor 62. The receiver 61 is configured to receive a new session establishment request sent by a session management network element, where the new session establishment request includes a tunnel endpoint identifier allocated by the session management network element to UE, a packet data network identity, and data packet processing and forwarding rules, where the tunnel endpoint identifier is allocated by the session management network element to the UE after receiving an attach request/a new packet data network establishment request sent by the UE. The processor 62 is configured to: find, when the receiving module receives a data packet, a packet data network identity and data packet processing and forwarding rules based on a tunnel endpoint identifier of the data packet, and correspondingly process and forward the data packet according to the data packet processing and forwarding rules, thereby implementing dynamic creation of a local PDN. In this way, a local PDN can be flexibly created anytime and anywhere, thereby overcoming limitations of the prior art in which a period for creating a local network is long and a network location is fixed.

A system for dynamically creating a local packet data network provided in the embodiments of the present invention includes the user plane selection unit shown in FIG. 14, the session management network element shown in FIG. 15 or FIG. 16, and the user plane network element shown in FIG. 17.

The embodiments in this specification are all described in a progressive manner, for same or similar parts in the embodiments, reference may be made to these embodiments, and each embodiment focuses on a difference from other embodiments. Especially, a system embodiment is basically similar to a method embodiment, and therefore is described briefly; for related parts, reference may be made to partial descriptions in the method embodiment.

A person of ordinary skill in the art may understand that, each aspect of this application or a possible implementation of each aspect may be specifically implemented as a system, a method, or a computer program product. Therefore, aspects of this application or possible implementations of the aspects may use forms of hardware only embodiments, software only embodiments (including firmware, resident software, and the like), or embodiments with a combination of software and hardware, which are uniformly referred to as "circuit", "module", or "system" herein. In addition, the aspects of this application or the possible implementations of the aspects may take a form of a computer program product, where the computer program product refers to computer-readable program code stored in a computer-readable medium.

The computer-readable medium may be a computer-readable signal medium or a computer-readable storage medium. The computer-readable storage medium includes but is not limited to an electronic, magnetic, optical, electromagnetic, infrared, or semi-conductive system, device, or apparatus, or any appropriate combination thereof, such as a random access memory (RAM), a read-only memory (ROM), an erasable programmable read only memory (EPROM or flash memory), an optical fiber, and a compact disc read only memory (CD-ROM).

A processor in a computer reads computer-readable program code stored in a computer-readable medium, so that the processor can perform a function and an action specified in each step or a combination of steps in a flowchart; an apparatus is generated to implement a function and an action specified in each block or a combination of blocks in a block diagram.

All computer-readable program code may be locally executed on a user computer, or some may be locally executed on a user computer as a standalone software package, or some may be executed on a local computer of a user while some is executed on a remote computer, or all the code may be executed on a remote computer or a server. It should also be noted that, in some alternative implementation solutions, each step in the flowcharts or functions specified in each block in the block diagrams may not occur in the illustrated order. For example, two consecutive steps or two blocks in the illustration, which are dependent on an involved function, may in fact be executed substantially at the same time, or these blocks may sometimes be executed in reverse order.

Obviously, a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A method for dynamically creating a local packet data network, comprising:
receiving, by a user plane selection unit, a user plane network element selection request, wherein the user plane network element selection request carries cell location information, a service type, and an access point name of user equipment UE;
allocating, by the user plane selection unit, a first user plane network element to the UE based on the cell location information, the service type, and the access point name of the UE; and
sending, by the user plane selection unit, a user plane network element response message that carries an identifier of the first user plane network element to a session management network element, so that the session management network element sends a new session establishment request to the first user plane network element, wherein the new session establishment request comprises a tunnel endpoint identifier allocated by the session management network element to the UE, a packet data network identity, and data packet processing and forwarding rules, wherein the tunnel endpoint identifier is allocated by the session management network element to the UE after receiving an attach request/a new packet data network establishment request sent by the UE.

2. The method according to claim 1, wherein before the allocating, by the user plane selection unit, a first user plane network element to the user based on the cell location information, the service type, and the access point name of the UE, the method further comprises:
searching, by the user plane selection unit, a local cache of the user plane selection unit to determine whether there is a second user plane network element corresponding to the cell location information, the service type, and the access point name of the UE, and if yes, using the second user plane network element as the first user plane network element, or if no, allocating the first user plane network element to the UE, and storing a mapping relationship between the first user plane network element and the cell location information, the service type, and the access point name of the UE in the local cache of the user plane selection unit.

3. The method according to claim 2, wherein the user plane network element selection request is sent by the session management network element when identifying, after receiving the attach request/new packet data network establishment request, that the access point name of the UE carried in the attach request/new packet data network establishment request is a dynamically created local packet data network.

4. The method according to claim 1 or 2, wherein the user plane network element selection request is sent by the domain name system after receiving a domain name system request sent by the session management network element, wherein the domain name system request is sent by the session management network element after receiving the attach request/new packet data network establishment request; and
the sending, by the user plane selection unit, a response message that carries an identifier of the first user plane network element to a session management network element comprises:
sending, by the user plane selection unit, the user plane network element response message that carries the identifier of the first user plane network element to the domain name system, so that the domain name system sends a domain name system request response message to the session management network element after receiving the user plane network element response message, wherein the domain name system request response message carries the identifier of the first user plane network element.

5. The method according to claim 4, wherein the user plane network element selection request is sent by the domain name system when identifying, after receiving the domain name system request sent by the session management network element, that the access point name of the UE carried in the domain name system request is a dynamically created local packet data network.

6. The method according to claim 4, wherein the user plane network element selection request is sent by the domain name system when identifying, after receiving the domain name system request sent by the session management network element, that the access point name of the UE carried in the domain name system request is a dynamically created local packet data network, and when finding no third user plane network element corresponding to the cell location information, the service type, and the access point name of the UE in a local cache of the domain name system; and
the sending, by the user plane selection unit, a response message that carries an identifier of the first user plane network element to a session management network element comprises:
sending, by the user plane selection unit, the user plane network element response message that carries the identifier of the first user plane network element to the domain name system, so that the domain name system stores a mapping relationship between the first user plane network element and the cell location information, the service type, and the access point name of the UE in the local cache of the domain name system after receiving the user plane network element response message, and sends the domain name system request response message to the session management network element, wherein the domain name system request response message carries the identifier of the first user plane network element.

7. The method according to any one of claims 1 to 6, wherein the session management network element is a control plane gateway or a mobility management network element; or
the session management network element is a control plane gateway and a mobility management network element.

8. A method for dynamically creating a local packet data network, comprising:
sending, by a session management network element, a user plane network element selection request to a user plane selection unit, wherein the user plane network element selection request carries cell location information, a service type, and an access point name of UE, so that the user plane selection unit allocates a first user plane network element to the UE based on the cell location information, the service type, and the access point name of the UE;
receiving, by the session management network element, a user plane network element response message that carries an identifier of the first user plane network element and that is sent by the user plane selection unit; and
sending, by the session management network element, a new session establishment request to the first user plane network element, wherein the new session establishment request comprises a tunnel endpoint identifier allocated by the session management network element to the UE, a packet data network identity, and data packet processing and forwarding rules, wherein the tunnel endpoint identifier is allocated by the session management network element to the UE after receiving an attach request/a new packet data network establishment request sent by the UE.

9. The method according to claim 8, wherein the first user plane network element is found by the user plane selection unit in a local cache of the user plane selection unit based on a mapping relationship between a user plane network element and the cell location information, the service type, and the access point name of the UE before allocating the first user plane network element to the UE.

10. The method according to claim 9, wherein before the sending, by a sending module, a user plane network element selection request to a user plane selection unit, the method further comprises:
identifying, by the session management network element, that the access point name of the UE carried in the attach request/new packet data network establishment request is a dynamically created local packet data network.

11. The method according to claim 9, wherein the sending, by a session management network element, a user plane network element selection request to a user plane selection unit comprises:
sending, by the session management network element, a domain name system request to a domain name system, so that the domain name system sends the user plane network element selection request to the user plane selection unit; and
correspondingly, the receiving, by the session management network element, a user plane network element response message that carries an identifier of the first user plane network element and that is sent by the user plane selection unit comprises:
receiving, by the session management network element, a domain name system request response message sent by the domain name system after receiving the user plane network element response message, wherein the domain name system request response message carries the identifier of the first user plane network element.

12. The method according to claim 11, wherein the sending, by a session management network element, a user plane network element selection request to a user plane selection unit comprises:
sending, by the session management network element, the domain name system request to the domain name system, so that the domain name system sends the user plane network element selection request to the user plane selection unit when identifying that the access point name of the UE carried in the domain name system request is a dynamically created local packet data network; and
correspondingly, the receiving, by the session management network element, a user plane network element response message that carries an identifier of the first user plane network element and that is sent by the user plane selection unit comprises:
receiving, by the session management network element, the domain name system request response message sent by the domain name system after receiving the user plane network element response message, wherein the domain name system request response message carries the identifier of the first user plane network element.

13. The method according to claim 8, wherein the sending, by a session management network element, a user plane network element selection request to a user plane selection unit comprises:
sending, by the session management network element, a domain name system request to a domain name system, so that when identifying that the access point name of the UE carried in the domain name system request is a dynamically created local packet data network, the domain name system searches a local cache of the domain name system to determine whether there is a user plane network element corresponding to the cell location information, the service type, and the access point name of the UE, and if no, sends the user plane network element selection request to the user plane selection unit, or if yes, directly sends a domain name system request response message to the session management network element, wherein the DNS request response message carries an identifier of the found user plane network element, and the found user plane network element is used as the first user plane network element; and
correspondingly, the receiving, by the session management network element, a user plane network element response message that carries an identifier of the first user plane network element and that is sent by the user plane selection unit comprises:
receiving, by the session management network element, the domain name system request response message sent by the domain name system after storing a mapping relationship between the first user plane network element and the cell location information, the service type, and the access point name of the UE in the local cache of the domain name system after receiving the user plane network element response message, wherein the domain name system request response message carries the identifier of the first user plane network element.

14. The method according to any one of claims 8 to 13, wherein the session management network element is a control plane gateway or a mobility management network element; or
the session management network element is a control plane gateway and a mobility management network element.

15. A method for dynamically creating a local packet data network, comprising:
receiving, by a user plane network element, a new session establishment request sent by a session management network element, wherein the new session establishment request comprises a tunnel endpoint identifier allocated by the session management network element to the UE, a packet data network identity, and data packet processing and forwarding rules, wherein the tunnel endpoint identifier is allocated by the session management network element to the UE after receiving an attach request/a new packet data network establishment request sent by the UE; and
finding, by the user plane network element when receiving a data packet, a packet data network identity and data packet processing and forwarding rules based on a tunnel endpoint identifier of the data packet, and correspondingly processing and forwarding the data packet according to the data packet processing and forwarding rules.

16. A user plane selection unit, comprising:
a receiving module, configured to receive a user plane network element selection request, wherein the user plane network element selection request carries cell location information, a service type, and an access point name of user equipment UE;
an allocation module, configured to allocate a first user plane network element to the UE based on the cell location information, the service type, and the access point name of the UE; and
a sending module, configured to send a user plane network element response message that carries an identifier of the first user plane network element to a session management network element, so that the session management network element sends a new session establishment request to the first user plane network element, wherein the new session establishment request comprises a tunnel endpoint identifier allocated by the session management network element to the UE, a packet data network identity, and data packet processing and forwarding rules, wherein the tunnel endpoint identifier is allocated by the session management network element to the UE after receiving an attach request/a new packet data network establishment request sent by the UE.

17. The user plane selection unit according to claim 16, wherein the allocation module is specifically configured to:
search a local cache of the user plane selection unit to determine whether there is a second user plane network element corresponding to the cell location information, the service type, and the access point name of the UE, and if yes, use the second user plane network element as the first user plane network element, or if no, allocate the first user plane network element to the UE, and store a mapping relationship between the first user plane network element and the cell location information, the service type, and the access point name of the UE in the local cache of the user plane selection unit.

18. The user plane selection unit according to claim 17, wherein the user plane network element selection request is sent by the session management network element when identifying, after receiving the attach request/new packet data network establishment request, that the access point name of the UE carried in the attach request/new packet data network establishment request is a dynamically created local packet data network.

19. The user plane selection unit according to claim 17 or 18, wherein the user plane network element selection request is sent by the domain name system after receiving a domain name system request sent by the session management network element, wherein the domain name system request is sent by the session management network element after receiving the attach request/new packet data network establishment request; and
the sending module is specifically configured to:
send the user plane network element response message that carries the identifier of the first user plane network element to the domain name system, so that the domain name system sends a domain name system request response message to the session management network element after receiving the user plane network element response message, wherein the domain name system request response message carries the identifier of the first user plane network element.

20. The user plane selection unit according to claim 19, wherein the user plane network element selection request is sent by the domain name system when identifying, after receiving the domain name system request sent by the session management network element, that the access point name of the UE carried in the domain name system request is a dynamically created local packet data network.

21. The user plane selection unit according to claim 19, wherein the user plane network element selection request is sent by the domain name system when identifying, after receiving the domain name system request sent by the session management network element, that the access point name of the UE carried in the domain name system request is a dynamically created local packet data network, and when finding no third user plane network element corresponding to the cell location information, the service type, and the access point name of the UE in a local cache of the domain name system; and
the sending module is specifically configured to:
send the user plane network element response message that carries the identifier of the first user plane network element to the domain name system, so that the domain name system stores a mapping relationship between the first user plane network element and the cell location information, the service type, and the access point name of the UE in the local cache of the domain name system after receiving the user plane network element response message, and sends the domain name system request response message to the session management network element, wherein the domain name system request response message carries the identifier of the first user plane network element.

22. The user plane selection unit according to any one of claims 16 to 21, wherein the session management network element is a control plane gateway or a mobility management network element; or
the session management network element is a control plane gateway and a mobility management network element.

23. A session management network element, comprising:
a sending module, configured to send a user plane network element selection request to a user plane selection unit, wherein the user plane network element selection request carries cell location information, a service type, and an access point name of UE, so that the user plane selection unit allocates a first user plane network element to the UE based on the cell location information, the service type, and the access point name of the UE; and
a receiving module, configured to receive a user plane network element response message that carries an identifier of the first user plane network element and that is sent by the user plane selection unit, wherein
the sending module is further configured to send a new session establishment request to the first user plane network element, wherein the new session establishment request comprises a tunnel endpoint identifier allocated by the session management network element to the UE, a packet data network identity, and data packet processing and forwarding rules, wherein the tunnel endpoint identifier is allocated by the session management network element to the UE after receiving an attach request/a new packet data network establishment request sent by the UE.

24. The session management network element according to claim 23, wherein the first user plane network element is found by the user plane selection unit in a local cache of the user plane selection unit based on a mapping relationship between a user plane network element and the cell location information, the service type, and the access point name of the UE before allocating the first user plane network element to the UE.

25. The session management network element according to claim 24, further comprising:
an identification module, configured to: before the sending module sends the user plane network element selection request to the user plane selection unit, identify that the access point name of the UE carried in the attach request/new packet data network establishment request is a dynamically created local packet data network.

26. The session management network element according to claim 24, wherein the sending module is specifically configured to:
send a domain name system request to a domain name system, so that the domain name system sends the user plane network element selection request to the user plane selection unit; and
correspondingly, the receiving module is specifically configured to:
receive a domain name system request response message sent by the domain name system after receiving the user plane network element response message, wherein the domain name system request response message carries the identifier of the first user plane network element.

27. The session management network element according to claim 26, wherein the sending module is specifically configured to:
send the domain name system request to the domain name system, so that the domain name system sends the user plane network element selection request to the user plane selection unit when identifying that the access point name of the UE carried in the domain name system request is a dynamically created local packet data network; and
correspondingly, the receiving module is specifically configured to:
receive the domain name system request response message sent by the domain name system after receiving the user plane network element response message, wherein the domain name system request response message carries the identifier of the first user plane network element.

28. The session management network element according to claim 23, wherein the sending module is specifically configured to:
send a domain name system request to a domain name system, so that when identifying that the access point name of the UE carried in the domain name system request is a dynamically created local packet data network, the domain name system searches a local cache of the domain name system to determine whether there is a user plane network element corresponding to the cell location information, the service type, and the access point name of the UE, and if no, sends the user plane network element selection request to the user plane selection unit, or if yes, directly sends a domain name system request response message to the session management network element, wherein the DNS request response message carries an identifier of the found user plane network element, and the found user plane network element is used as the first user plane network element; and
correspondingly, the receiving module is specifically configured to:
receive the domain name system request response message sent by the domain name system after storing a mapping relationship between the first user plane network element and the cell location information, the service type, and the access point name of the UE in the local cache of the domain name system after receiving the user plane network element response message, wherein the domain name system request response message carries the identifier of the first user plane network element.

29. The session management network element according to any one of claims 23 to 28, wherein the session management network element is a control plane gateway or a mobility management network element; or
the session management network element is a control plane gateway and a mobility management network element.

30. A user plane network element, comprising:
a receiving module, configured to receive a new session establishment request sent by a session management network element, wherein the new session establishment request comprises a tunnel endpoint identifier allocated by the session management network element to the UE, a packet data network identity, and data packet processing and forwarding rules, wherein the tunnel endpoint identifier is allocated by the session management network element to the UE after receiving an attach request/a new packet data network establishment request sent by the UE; and
a processing module, configured to: find, when the receiving module receives a data packet, a packet data network identity and data packet processing and forwarding rules based on a tunnel endpoint identifier of the data packet, and correspondingly process and forward the data packet according to the data packet processing and forwarding rules.

31. A system for dynamically creating a local packet data network, comprising the user plane selection unit according to any one of claims 16 to 22, the session management network element according to any one of claims 23 to 29, and the user plane network element according to claim 30.
